(19) **Europäisches Patentamt / European Patent Office / Office européen des brevets**

(11) **EP 3 659 072 B1**

(12) **FASCICULE DE BREVET EUROPEEN**

(45) Date de publication et mention de la délivrance du brevet:
**12.06.2024 Bulletin 2024/24**

(21) Numéro de dépôt: **18736953.3**

(22) Date de dépôt: **11.07.2018**

(51) Classification Internationale des Brevets (IPC):
**G06N 3/088** *(2023.01)*  **G06N 3/049** *(2023.01)*
**G06N 3/045** *(2023.01)*  **G06N 3/063** *(2023.01)*

(52) Classification Coopérative des Brevets (CPC):
**G06N 3/049; G06N 3/045; G06N 3/063; G06N 3/088**

(86) Numéro de dépôt international:
**PCT/EP2018/068853**

(87) Numéro de publication internationale:
**WO 2019/020384 (31.01.2019 Gazette 2019/05)**

(54) **CALCULATEUR POUR RESEAU DE NEURONES IMPULSIONNEL AVEC AGREGATION MAXIMALE**

**RECHNER FÜR SPIKING NEURAL NETWORK MIT MAXIMALER AGGREGATION**

**CALCULATOR FOR SPIKING NEURAL NETWORK WITH MAXIMUM AGGREGATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2017 FR 1757052**

(43) Date de publication de la demande:
**03.06.2020 Bulletin 2020/23**

(73) Titulaire: **Commissariat à l'Énergie Atomique et aux Énergies Alternatives
75015 Paris (FR)**

(72) Inventeurs:
- **LORRAIN, Vincent
  91120 Palaiseau (FR)**
- **BICHLER, Olivier
  78125 Vieille Eglise En Yvelines (FR)**

(74) Mandataire: **Atout PI Laplace
Immeuble Up On
25 Boulevard Romain Rolland
CS 40072
75685 Paris Cedex 14 (FR)**

- **CAMILLERI P ET AL: "A Neuromorphic aVLSI network chip with configurable plastic synapses", HYBRID INTELLIGENT SYSTEMS, 2007. HIS 2007. 7TH INTERNATIONAL CONFERENCE ON, IEEE, PISCATAWAY, NJ, USA, 1 septembre 2007 (2007-09-01), pages 296-301, XP031142847, ISBN: 978-0-7695-2946-2**
- **RITCHIE E. BROWN ET AL: "Turning a Negative into a Positive: Ascending GABAergic Control of Cortical Activation and Arousal", FRONTIERS IN NEUROLOGY, vol. 6, 11 juin 2015 (2015-06-11), XP055459898, DOI: 10.3389/fneur.2015.00135**
- **CARLOS ZAMARRENO-RAMOS ET AL: "On Spike-Timing-Dependent-Plasticity, Memristive Devices, and Building a Self-Learning Visual Cortex", FRONTIERS IN NEUROSCIENCE, vol. 5, 1 janvier 2011 (2011-01-01), XP055012442, ISSN: 1662-4548, DOI: 10.3389/fnins.2011.00026**
- **T. SERRANO-GOTARREDONA ET AL: "STDP and STDP variations with memristors for spiking neuromorphic learning systems", FRONTIERS IN NEUROSCIENCE, vol. 7, 1 février 2013 (2013-02-01), XP055355785, DOI: 10.3389/fnins.2013.00002**

(56) Documents cités:
**CN-A- 103 279 958     US-A1- 2014 229 411**

• ELISABETTA CHICCA ET AL: "A Multichip Pulse-Based Neuromorphic Infrastructure and Its Application to a Model of Orientation Selectivity", IEEE TRANSACTIONS ON CIRCUITS AND SYSTEMS PART I: REGULAR PAPERS, IEEE SERVICE CENTER, NEW YORK, NY, US, vol. 54, no. 5, 1 May 2007 (2007-05-01), pages 981-993, XP011180955, ISSN: 1057-7122, DOI: 10.1109/TCSI.2007.893509

## Description

### Domaine technique

L'invention concerne de manière générale les réseaux de neurones matériels et en particulier un calculateur basé sur un réseau de neurones convolutionnel à impulsion.

Les réseaux de neurones matériels comprennent des neurones interconnectés entre eux par des synapses, qui sont classiquement implémentées par des mémoires numériques. Les synapses peuvent être également implémentées par des composants résistifs dont la conductance varie en fonction de la tension appliquée à leurs bornes. Les réseaux de neurones matériels sont utilisés dans différents domaines de traitement du signal (visuel, sonore, ou autre) comme par exemple dans le domaine de la classification d'image ou de la reconnaissance d'image.

Les réseaux de neurones convolutionnels correspondent à un modèle particulier de réseau de neurones matériels. Les réseaux de neurones convolutionnels ont été décrits initialement dans l'article de K. Fukushima, « Neocognitron: A self-organizing neural network model for a mechanism of pattern recognition unaffected by shift in position. Biological Cybernetics, 36(4):193-202, 1980. ISSN 0340-1200. doi: 10.1007/BF00344251 ».

Les réseaux de neurones convolutionnels (CNN) sont utilisés notamment dans des systèmes de classifications d'images pour accélérer la classification. Appliqués à la reconnaissance d'images, ces réseaux permettent un apprentissage des représentations intermédiaires d'objets dans les images qui sont plus petites et généralisables pour des objets similaires, ce qui facilite leur reconnaissance. Cependant, le fonctionnement intrinsèquement parallèle et la complexité des classificateurs classiques de type réseau de neurones convolutionnels limitent leur implémentation dans les systèmes embarqués, qui imposent de fortes contraintes en matière de surface et de consommation.

Des solutions ont été proposées pour implémenter les réseaux de neurones matériels sur processeur graphique GPU afin d'améliorer leurs performances, comme par exemple la solution décrite dans l'article de D. C. Ciresan, U. Meier, J. Masci, L. M. Gambardella, and J. Schmidhuber, « Flexible, high performance convolutional neural networks for image classification. Proceedings of the Twenty-Second International Joint Conférence on Artificial Intelligence - Volume Two», IJCAI' 11, pages 1237-1242, 2011. ISBN 978-1-57735-514-4. doi: 10.5591/978-1-57735-516-8/IJCAI11-210.

Plusieurs implémentations matérielles de réseau convolutionnel impulsionnel ont notamment été proposées dans L. Camunas-Mesa, C. Zamarreno-Ramos, A. Linares-Barranco, A. Acosta-Jimenez, T. Serrano- Gotarredona, and B. Linares-Barranco. An event-driven multi-kernel convolution processor module for event-driven vision sensors. Solid-State Circuits, IEEE Journal of, 47(2):504-517, 2012. ISSN 0018-9200. doi: 10.1109/JSSC.2011.2167409. Une telle implémentation de convolution utilise une mémoire numérique séparée pour stocker les coefficients des noyaux de convolution, les coefficients du noyau de la mémoire étant copiés dans l'unité de calcul (ALU) à chaque arrivée d'impulsion.

E. Chicca ET AL: "A Multichip Pulse-Based Neuromorphic Infrastructure and Its Application to a Model of Orientation Selectivity", IEEE Trans. Cire. Sys. Part I: Regular Papers, IEEE NY, US, vol. 54, no. 5, 1 mai 2007 (2007-05-01), décrit un système neuromorphique qui reproduit les caractéristiques des modules de traitement néocorticaux, en utilisant une structure régulière, c'est-à-dire le cortex utilisant un circuit de traitement commun, ou microcircuit canonique, qui peut être réglé pour effectuer des tâches spécifiques et utilisé de manière modulaire pour mettre en oeuvre différentes fonctionnalités.

Un réseau de neurones est constitué d'une ou plusieurs couches de convolution pouvant inclure des couches d'agrégation (dites « pooling » en langue anglo-saxonne). La sortie d'une couche de convolution peut être connectée sur l'entrée de la couche suivante. Les couches de convolution sont constituées de neurones. Dans une couche de convolution, chaque neurone est connecté à au moins une partie (sous-matrice) de la matrice d'entrée $I$. Les sous-matrices ont la même taille pour une même couche données, la taille des sous matrices définissant la taille du filtre.

Une couche de convolution ou de « pooling » peut être constituée d'une ou plusieurs matrices de sortie (encore appelées « cartes de sortie » ou « output feature map » en langue anglo-saxonne), chaque carte de sortie pouvant être connectée à une ou plusieurs matrices d'entrée (encore appelées « cartes d'entrée »).

Dans un réseau de neurones, les neurones sont connectés à leur sous-matrice d'entrée $I$ par des synapses dont le poids est réglable. La matrice $K$ des poids synaptiques (encore appelés « coefficient de poids» ou « coefficients de convolution ») appliquée aux sous-matrices d'entrée des neurones est la même pour tous les neurones d'une même carte de sortie ("feature map" en langue anglo-saxone). Une telle matrice $K$ est encore appelée « noyau de convolution » ou « filtre » ou « matrice de convolution ».

Une couche de convolution peut comprendre un ou plusieurs noyaux de convolution, qui ont chacun une matrice d'entrée, qui peut être la même, mais qui ont des coefficients différents correspondant à des filtres différents. Chaque noyau de convolution dans une couche produit une carte de sortie différente de sorte que les neurones de sortie sont différents pour chaque noyau. Lorsque les réseaux convolutionnels incluent des couches de "pooling" locales ou globales, ces couches de « pooling » combinent les sorties de groupe de neurones d'une ou plusieurs cartes de sortie. La combinaison des sorties peut consister par exemple à prendre la valeur maximale (« MaxPooling ») ou moyenne des sorties du groupe de neurones, pour la sortie correspondante, sur la carte de sortie de la couche de « pooling ».

Les couches d'agrégation maximal « Maxpooling » permettent de réduire la taille des cartes de sorties d'une couche à l'autre dans le réseau, tout en améliorant ses performances en le rendant plus tolérant à de petites déformations ou translations dans les données d'entrée.

Les couches de type « MaxPooling » sont utilisées dans de nombreux réseaux de neurones dont notamment les réseaux conventionnels (CNN).

Le regroupement « Maxpooling » permet en outre d'augmenter drastiquement les performances dans les réseaux de neurones et de réduire le nombre de signaux à émettre.

Dans le cas d'un réseau de neurones impulsionnels (dits à « Spike ») utilisant un codage fréquentiel, les couches de « MaxPooling » sont utilisées pour sélectionner les signaux de plus grandes fréquences.

Il existe plusieurs approches d'implémentations de cette fonction de « MaxPooling » pour réseau de neurones impulsionnel, soit en utilisant un sous-réseau soit en changeant de modèle de neurone.

Dans les réalisations basées sur le changement de modèle de neurones, en considérant un neurone ayant N synapses, les implémentations utilisées pour effectuer une fonction de « MaxPooling » classique nécessitent N compteurs de C bits (C étant la précision du compteur d'activité) ainsi qu'une fonction de tri, ce qui requiert de nombreuses ressources.

Par exemple, dans certaines implémentations connues, la fonction de « MaxPooling » est réalisée par une fonction de type « Winner Takes All » (WTA) appliquée par zone (expression anglo-saxonne signifiant littéralement « le gagnant prend tout »). Une telle solution WTA est utilisée classiquement dans des calculateurs dédiés à partir d'un réseau WTA, comme décrit par exemple dans l'article « Adaptive WTA with an Analog VLSI Neuromorphic Learning Chip », IEEE Transactions on Neural Networks 18(2) (2007) de Hafliger Philip ou encore dans l'article « Biophysiologically Plausible Implementations of the Maximum Operation », Neural Computation, Volume 14, Issue 12 (November 2002), de Angela J. Yu, Martin A. Giese, Tomaso A. Poggio. Dans les implémentations WTA, les neurones utilisés ont un modèle classique de type « Integrate and Fire » ou IF (expression anglo-saxonne signifiant littéralement « Intègre et Tire »), ou Leaky Integrate and Fire (LIF) (expression anglo-saxonne signifiant littéralement « Intègre et Tire à fuite »), la structure du réseau et les règles d'apprentissage constituant la fonction WTA.

Cependant, les réseau WTA nécessitent un processus d'apprentissage additionnel et ont une complexité matérielle trop importante.

Il existe donc un besoin pour un calculateur à base d'architecture de réseau de neurones optimisé pour réaliser la fonctions d'agrégation maximale (« MaxPooling »).

## Définition générale de l'invention

L'invention vient améliorer la situation en proposant un calculateur basé sur un réseau de neurones impulsionnel, le réseau comprenant des couches de neurones, les entrées et sorties de chaque neurone étant codées par des impulsions, les impulsions d'entrée étant reçues en séquence en entrée d'un neurone, chaque neurone du réseau comprenant un champ récepteur comprenant au moins une synapse. Chaque synapse est associée à une adresse de synapse. Le calculateur est configuré pour calculer, pour chaque couche de neurones, la valeur de sortie de chaque neurone en réponse à au moins une impulsion d'entrée. Le réseau comprend en outre au moins une couche d'agrégation maximale (couche de « MaxPooling »), chaque couche d'agrégation comprenant des neurones d'agrégation maximale, chaque neurone d'agrégation maximale étant apte à délivrer une impulsion de sortie en réponse à la réception d'une impulsion d'entrée sur la synapse de son champ récepteur la plus active (i.e. synapse du champ récepteur du neurone d'agrégation maximale ayant la fréquence est la plus élevée). Selon un aspect de l'invention, le calculateur comprend un dispositif d'activation des neurones de la couche d'agrégation maximale. En réponse à une impulsion d'entrée reçue par un neurone de la couche d'agrégation maximale, le dispositif est configuré pour recevoir l'adresse de la synapse associée à l'impulsion d'entrée reçue, dite adresse de synapse activée, le dispositif comprenant un comparateur d'adresse configuré pour comparer l'adresse de la synapse activée avec un ensemble d'adresses de référence, comprenant au moins une adresse de référence, chaque adresse de référence étant associée à une valeur de dureté et à un neurone d'agrégation. Le dispositif est configuré pour activer un neurone de la couche d'agrégation maximale si l'adresse de la synapse activée est égale à l'une des adresses de référence, et que la valeur de dureté associée à cette adresse de référence a la valeur la plus grande parmi les valeurs de dureté associées aux autres adresses de référence dudit ensemble.

Le dispositif est en outre configuré pour mettre une adresse de référence à la valeur de l'adresse de synapse activée, si l'adresse de référence est distincte de l'adresse de synapse activée et si la valeur de dureté est inférieure ou égale à '0' (zéro), le dispositif étant en outre configuré pour délivrer une valeur d'impulsion de sortie à la valeur '1' (un) en association avec l'adresse de référence et mettre la valeur de dureté associée à l'adresse de référence à une valeur d'initialisation prédéfinie.

Dans un mode de réalisation, le dispositif peut comprendre un compteur configuré pour incrémenter la valeur de dureté associé à une adresse de référence dudit ensemble d'adresses de référence d'une valeur d'incrémentation choisie, si l'adresse de référence est égale à l'adresse de synapse activée, le dispositif étant en outre configuré pour délivrer une valeur d'impulsion de sortie mise à la valeur '1' (un), en association avec l'adresse de référence.

Le dispositif peut en outre comprendre un comparateur de valeur de dureté pour comparer la valeur de dureté à zéro, tandis que le compteur est configuré pour décrémenter la valeur de dureté associé à une adresse de référence d'une valeur de décrémentation choisie, si l'adresse de référence de l'ensemble d'adresses de référence est distincte de l'adresse de synapse activée et si le comparateur de valeur de dureté indique que la valeur de dureté est strictement supérieure à zéro.

Le dispositif peut être configuré pour déterminer l'adresse de la valeur de dureté ayant la valeur maximale et pour délivrer en sortie du neurone de la couche d'activation maximale une valeur d'impulsion de sortie correspondant à la valeur de l'impulsion de sortie associée à l'adresse de référence correspondant à la valeur de dureté.

Dans un mode de réalisation, le dispositif peut comprendre au moins une mémoire d'adresses pour stocker lesdites adresses de référence, et au moins une mémoire de valeurs de dureté pour stocker les valeurs de dureté associés à chaque adresse de référence, chaque adresse de référence dans la mémoire d'adresses étant associée à une valeur de dureté dans la mémoire de valeurs de dureté.

Avantageusement, le dispositif peut comprendre au moins une mémoire de valeurs d'initialisation pour stocker au moins une valeur d'initialisation.

En particulier, le dispositif peut comprendre une valeur d'initialisation différente pour chaque adresse de référence et la mémoire de valeur d'initialisation peut comprendre une structure de donnée, chaque entrée de la structure de donnée étant configurée pour stocker une valeur d'initialisation associée à une adresse de référence .

Selon certains modes de réalisation, le calculateur peut être implémenté sous forme d'un circuit numérique.

En variante, le calculateur peut être implémenté sous forme d'un circuit analogique.

Il est en outre proposé un procédé pour calculer les valeurs de sortie de neurones dans un réseau de neurones impulsionnel comprenant au moins une couche de neurones, en réponse à au moins une impulsion d'entrée, les entrées et sorties de chaque neurone étant codées par des impulsions, les impulsions d'entrée étant reçues en séquence en entrée d'un neurone, chaque neurone du réseau comprenant un champ récepteur comprenant au moins une synapse, chaque synapse étant associée à une adresse de synapse, le réseau de neurones comprenant en outre au moins une couche d'agrégation maximale, chaque couche d'agrégation comprenant des neurones d'agrégation maximale, chaque neurone d'agrégation maximale étant apte à délivrer une impulsion de sortie en réponse à la réception d'une impulsion d'entrée sur la synapse de son champ récepteur la plus active. Le procédé comprend une étape d'activation des neurones de la couche d'agrégation maximale. En réponse à une impulsion d'entrée reçue par un neurone de la couche d'agrégation maximale, l'étape d'activation comprend les étapes consistant à :

- recevoir l'adresse de la synapse associée à l'impulsion d'entrée reçue, dite adresse de synapse activée,
- comparer l'adresse de la synapse activée avec un ensemble d'adresses de référence, comprenant au moins une adresse de référence, chaque adresse de référence étant associée à une valeur de dureté et à un neurone d'agrégation ;
- activer un neurone de la couche d'agrégation maximale si l'adresse de la synapse activée est égale à l'une des adresses de référence et que la valeur de dureté associée à cette adresse de référence a la valeur la plus grande parmi les valeurs de dureté associées aux autres adresses de référence de l'ensemble.

Le procédé comprend en outre les étapes consistant à :

- mettre une adresse de référence à la valeur de ladite adresse de synapse activée, si ladite adresse de référence est distincte de ladite adresse de synapse activée et si la valeur de dureté est inférieure ou égale à zéro,
- délivrer une valeur d'impulsion de sortie mise à la valeur un en association avec ladite adresse de référence, et
- mettre la valeur de dureté associée à l'adresse de référence à une valeur d'initialisation prédéfinie.

Dans un mode de réalisation, le procédé peut comprendre les étapes consistant à :

- incrémenter la valeur de dureté associé à une adresse de référence dudit ensemble d'adresses de référence d'une valeur d'incrémentation choisie, si l'adresse de référence est égale à l'adresse de synapse activée, et
- délivrer une valeur d'impulsion de sortie mise à la valeur '1' (un) pour le neurone d'agrégation maximale, en association avec l'adresse de référence.

Le procédé peut en outre comprendre une étape consistant à comparer la valeur de dureté à zéro, et décrémenter la valeur de dureté associée à une adresse de référence d'une valeur de décrémentation choisie, si l'adresse de référence dudit ensemble d'adresses de référence est distincte de l'adresse de synapse activée et si la valeur de dureté est strictement supérieure à zéro.

Le procédé peut également comprendre les étapes consistant à :

- déterminer l'adresse de la valeur de dureté ayant la valeur maximale, et
- délivrer en sortie du neurone de la couche d'activation maximale une valeur d'impulsion de sortie correspondant à la valeur de l'impulsion de sortie associée à l'adresse de référence correspondant à la valeur de dureté.

L'invention permet ainsi d'approximer la fonction d'agrégation/d'union maximale (« MaxPooling »). Il en résulte un gain en mémoire et une réduction importante des ressources nécessaires pour effectuer la fonction de MaxPooling pour des impulsions positives, reçues séquentiellement, et ce, sans perte significative de performance de classification du réseau.

Les modes de réalisation de l'invention permettent en outre une réduction mémoire et une réduction de la complexité calculatoire et donc des ressources matérielles nécessaire pour l'implémentation de la fonction de « MaxPooling ».

Certains modes de réalisation peuvent être implémentés dans une architecture numérique, sans changement des accès mémoire et de la taille mémoire déjà instanciée pour le calcul de la réponse d'un neurone impulsionnel. En variante, ils peuvent être implémentés ou dans une architecture analogique.

Bien que non limitée à de telles applications, l'invention a des avantages particuliers dans les applications d'accélérateur de réseaux de neurone impulsionnel.

**Brève description des dessins**

D'autres caractéristiques et avantages de l'invention apparaîtront à l'aide de la description qui suit et des figures des dessins annexés dans lesquels:

- La figure 1 représente un exemple de réseau convolutionnel incluant des couches de regroupement (« pooling »), pour la classification d'images et des perceptrons;
- La figure 2 est un schéma montrant une couche de convolution constituée de plusieurs cartes de sortie ;
- La figure 3 illustre le principe de fonctionnement d'une couche de convolution dans un réseau de neurones convolutionnel ;
- La figure 4 est un schéma illustrant le codage impulsionnel et la propagation dans le réseau de neurones des impulsions ;
- La figure 5 représente schématiquement un calculateur pour calculer au moins une couche de convolution et la réponse des neurones des couches d'agrégation maximale, selon certains modes de réalisation,
- La figure 6 représente un exemple de connexion d'un neurone d'une couche d'agrégation maximale, pour un champ récepteur de taille 2*2 d'une matrice d'entrée,
- La figure 7 représente un schéma illustrant l'acheminement d'une impulsion d'entrée d'adresse reçue dans le champ récepteur d'un neurone d'une couche d'agrégation maximale, selon certains modes de réalisation,
- La figure 8A représente le dispositif de calcul d'agrégation maximale, selon un mode de réalisation,
- La figure 8B est une représentation schématique de chaque unité d'agrégation maximale, selon un mode de réalisation,
- La figure 9 illustre le procédé de déclenchement des neurones d'agrégation maximale, en réponse à une impulsion d'entrée reçue par un ou plusieurs neurones d'une couche d'agrégation maximale, selon certains modes de réalisation ;
- La figure 10 est un organigramme décrivant un exemple d'implémentation du procédé de déclenchement d'un neurone d'une couche d'agrégation maximale, selon un mode de réalisation ;
- La figure 11 est un organigramme représentant le procédé de déclenchement d'un neurone d'une couche d'agrégation maximale, selon un tel mode de réalisation utilisant une unique adresse de référence associée à un compteur de dureté et à un neurone d'une couche d'agrégation maximale ;
- La figure 12 représente le dispositif de déclenchement d'un neurone d'une couche d'agrégation maximale, sous la forme d'un circuit numérique comprenant une unité de calcul d'agrégation maximale, selon un mode de réalisation ;
- La figure 13 est un circuit analogique représentant un exemple d'implémentation du procédé de déclenchement d'un neurone d'une couche d'agrégation maximale, selon un autre mode de réalisation ;
- La figure 14 montre la table de correspondance pour les signaux d'entrée/sortie du dispositif de déclenchement des neurones d'une couche d'agrégation maximale ;
- La figure 15 est une représentation sous forme d'un circuit numérique du dispositif de déclenchement de neurones d'une couche d'agrégation maximale comprenant 3 unités de déclenchement de neurones ;

- La figure 16 est une représentation sous forme d'un circuit numérique d'une unité de déclenchement de neurone d'une couche d'agrégation maximale.

Les dessins pourront non seulement servir à mieux faire comprendre la description, mais aussi contribuer à la définition de l'invention, le cas échéant.

## Description détaillée

Pour faciliter la compréhension de certains modes de réalisation, certaines caractéristiques et définitions des réseaux de neurones convolutionnels sont indiquées ci-après.

Un réseau de neurones est constitué d'une ou plusieurs couches de convolution, les couches de convolution pouvant inclure une ou plusieurs couches d'agrégation (le terme « agrégation » est encore appelé « union » ou « mise en commun » ou « regroupement » comme traduction du terme anglo-saxon « pooling » correspondant). Les couches peuvent être suivies par un classifieur type perceptron multicouches. La sortie d'une couche de convolution peut être connectée sur l'entrée de la couche suivante.

Chaque couche de convolution prend ses entrées sur les sorties de la précédente couche. Une couche de convolution donnée est composée d'un nombre de neurones.

Dans une couche de convolution, chaque neurone est connecté à au moins une partie (encore appelée « sous-matrice » ou « champ récepteur ») de la matrice d'entrée. Les sous-matrices peuvent avoir la même taille pour une même couche et leur taille peut être égale à la taille du filtre. Les sous-matrices peuvent être décalées les unes des autres de manière régulière et peuvent se chevaucher.

Une couche de convolution traite ainsi les données des champs récepteurs des neurones.

Une couche de convolution comprend une ou plusieurs matrices de sortie comprenant un ensemble de neurones de sortie, chaque matrice de sortie étant connectée à une matrice d'entrée (la matrice d'entrée comprenant un ensemble de neurones d'entrée) par des synapses artificielles associées à une matrice de convolution comprenant les coefficients de poids synaptiques correspondant aux neurones de sortie de la matrice de sortie (des poids synaptiques (les coefficients de poids synaptiques sont encore appelés « poids synaptiques » ou « coefficient de poids» ou «coefficients de convolution » ou « pondérations »). La valeur de sortie de chaque neurone de sortie est déterminée à partir des neurones d'entrée de la matrice d'entrée auxquels le neurone de sortie est connecté et des coefficients de poids synaptiques de la matrice de convolution associée à la matrice de sortie. La valeur interne d'un neurone est ainsi déterminée par sommation des signaux arrivant au neurone, après pondération par les coefficients synaptiques, en provenance des neurones connectés, la sortie d'un neurone étant déterminée en appliquant une fonction de transfert à la valeur interne du neurone.

La matrice d'entrée peut être une image de dimension quelconque. La matrice d'entrée peut être par exemple une image en deux dimensions (2D), chaque pixel de l'image étant représenté par un neurone et ayant des valeurs représentées en niveau de gris, la position d'un pixel donné (neurone) étant fournie par les coordonnées XY. Pour une image en couleur, plusieurs niveaux de gris peuvent être utilisés ainsi que plusieurs matrices d'entrée. Les cordonnées d'un pixel s'exprime alors en XYZ.

Dans un réseau de neurones, les neurones sont connectés à leur sous-matrice d'entrée *I* par des synapses dont le poids est réglable. La matrice K des poids synaptiques appliquée aux sous-matrices d'entrée des neurones est la même pour tous les neurones d'une même carte de sortie ("feature map" en langue anglo-saxone). Une telle matrice K est encore appelée « noyau de convolution »ou « filtre ». Le noyau de convolution étant partagé pour l'ensemble des neurones d'une même carte de sortie O, et donc appliqué sur l'ensemble de la matrice d'entrée, il en résulte une diminution de la mémoire nécessaire pour le stockage des coefficients, ce qui optimise les performances. Par exemple pour la reconnaissance d'images, cela permet de minimiser le nombre de filtres ou de représentations intermédiaires qui codent au mieux les caractéristiques de l'image et qui sont réutilisables sur toute l'image. Les coefficients d'un noyau de convolution K peuvent correspondre à des filtres classiques de traitement du signal (par exemple Gaussien, Gabor, Laplace...), ou être déterminés par apprentissage, supervisé ou non-supervisé, par exemple en utilisant un algorithme de rétro-propagation du gradient. Les coefficients des noyaux de convolution peuvent être positifs ou négatifs et sont généralement normalisés entre -1 et 1. Les valeurs d'entrée et de sortie des neurones sont également normalisées entre -1 et 1.

Une couche de convolution peut comprendre un ou plusieurs noyaux de convolution qui ont chacun une matrice d'entrée, qui peut être la même, mais qui ont des coefficients différents correspondant à des filtres différents.

Chaque noyau de convolution dans une couche produit une carte de sortie différente. Les neurones de sortie sont donc différents pour chaque noyau.

Les couches d'agrégation (« pooling ») combinent les sorties de groupe de neurones des couches précédentes. Les couches d'agrégation (« pooling ») permettent ainsi de compresser l'information en réduisant la taille des images intermédiaires.

Dans les modes de réalisations de l'invention, le réseau de neurones convolutionnel comprend au moins un couche d'agrégation maximale configurée pour combiner les sorties de la couche précédente en prenant la valeur maximale (« MaxPooling »). Le réseau de neurones convolutionnel peut comprendre d'autres couches d'agrégation (de type maximal ou d'un autre type).

Une couche d'agrégation maximale est associée à un procédé de discrétisation basée sur un sous-échantillonnage. Le procédé de discrétisation permet de réduire la dimensionnalité (taille spatiale) de la matrice d'entrée de la couche d'agrégation maximale, en appliquant un filtre à des sous-matrices rectangulaires de la matrice d'entrée (représentant l'image d'entrée) ne se chevauchant pas, le filtre déterminant la valeur maximale de chaque sous-région et générant une matrice de sortie dans laquelle chaque élément correspond au maximum calculé pour une sous-région.

Le signal en sortie de chaque sous-matrice rectangulaire est défini en fonction des valeurs prises par les différents neurones (pixels) de la sous-matrice rectangulaire.

Dans certains modes de réalisation, une couche d'agrégation peuvent être insérée périodiquement entre deux couches de convolution successives d'une architecture à base de réseau de neurones convolutionnel CNN pour contrôler le sur-apprentissage («overfitting »).

Les sous matrices rectangulaires d'une couche d'agrégation maximale peuvent être par exemple de taille 2x2 (largeur/hauteur) et avoir comme valeur de sortie la valeur maximale de la sous-matrice rectangulaire d'entrée (« MaxPool 2x2 » avec compression d'un facteur 4). La couche d'agrégation maximale correspond alors à un filtre 2x2.

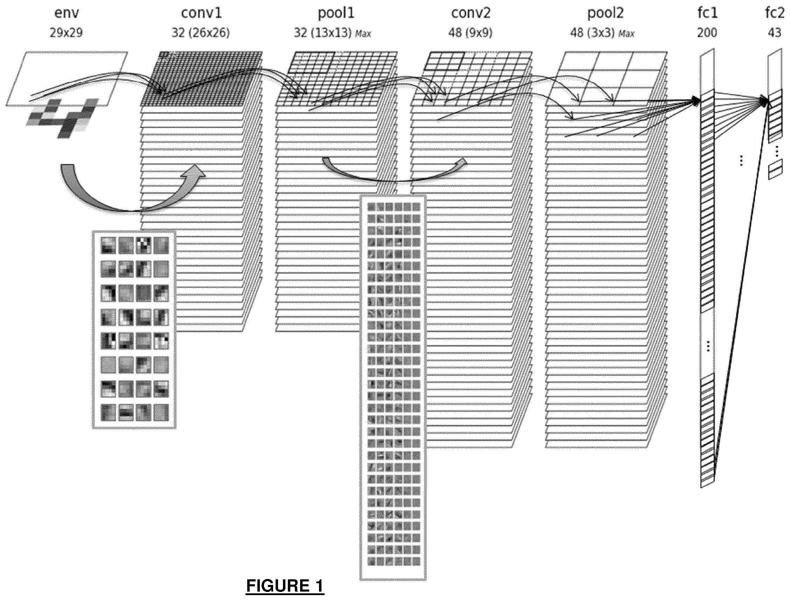

La Figure 1 représente un exemple de réseau convolutionnel incluant des couches d'agrégation (« pooling »), pour la classification d'images. Les images représentées en bas de la figure 1 représentent un extrait des noyaux de convolution de la première couche, après un apprentissage de type rétro-propagation du gradient, sur une base d'images telle que ImageNet.

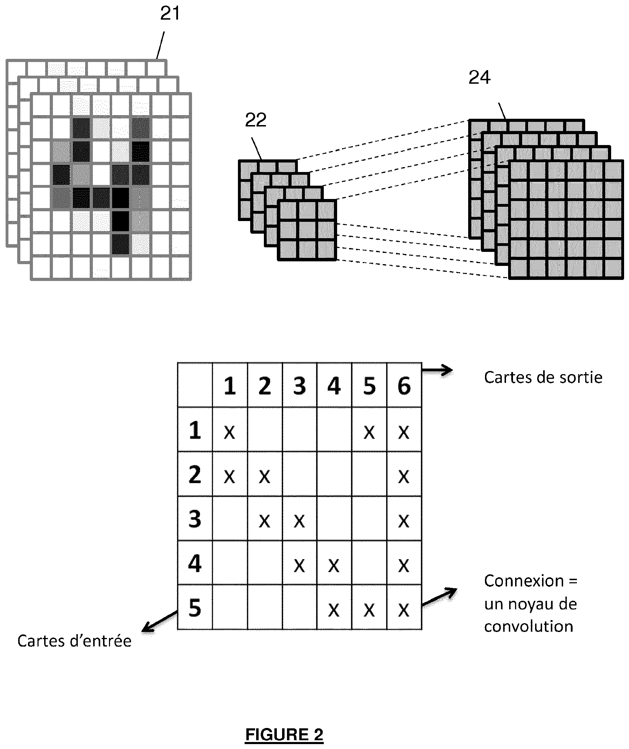

Comme illustré sur la figure 2, une couche de convolution ou de « pooling » peut être constituée d'une ou plusieurs matrices de sortie 24 (encore appelées « cartes de sortie » ou « output feature map » en langue anglo-saxonne), chaque carte de sortie pouvant être connectée à une ou plusieurs matrices d'entrée 21 (encore appelées « cartes d'entrée »).

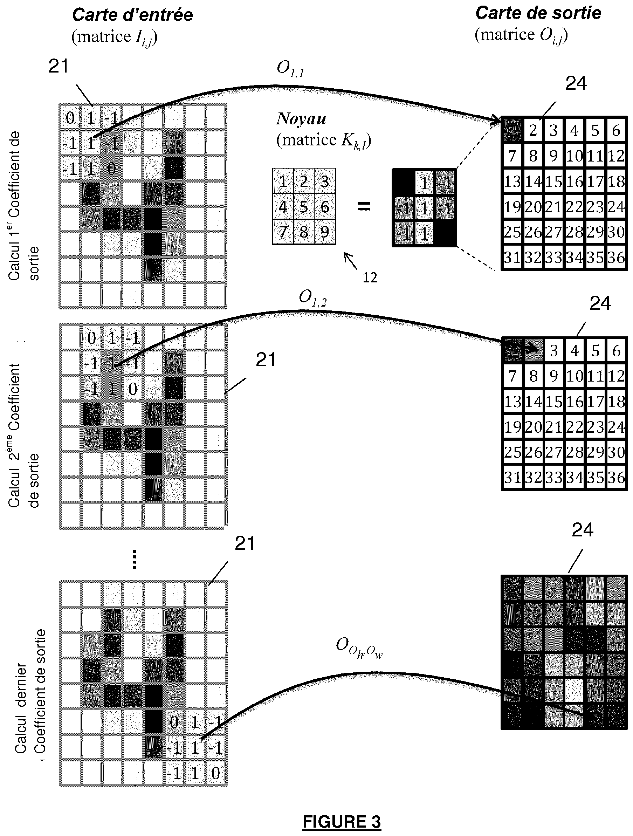

Comme illustré sur la figure 3, une matrice de sortie notée $O$ comprend des coefficients $O_{i,j}$, et a une taille notée ($O_h$, $O_w$). Cette matrice correspond à une matrice de neurones et les coefficients $O_{i,j}$ correspondent aux valeurs de sortie de ces neurones, calculée à partir des entrées et des poids synaptiques.

Une matrice ou carte d'entrée 21 peut correspondre à une carte de sortie d'une couche précédente ou à une matrice d'entrée du réseau qui reçoit des stimuli ou une partie des stimuli à traiter. Un réseau peut être constitué d'une ou plusieurs matrices d'entrée 21. Il peut s'agir par exemple des composantes RGB, HSV, YUV ou de toute autre composante classique d'une image, avec une matrice par composante. Une matrice d'entrée notée $I$ comprend des coefficients $I_{i,j}$ et a une taille notée ($I_h$, $I_w$).

Une carte de sortie $O$ peut être connectée à une matrice d'entrée $I$ par une opération de convolution, via un noyau de convolution 22 noté K (le noyau de convolution est encore appelé filtre, ou matrice de convolution), de taille ($n$, $m$) et comprenant des coefficients $K_{k,l}$. Chaque neurone de la carte de sortie 24 est connecté à une partie de la matrice d'entrée 21, cette partie étant encore appelée « sous-matrice d'entrée » ou « champ récepteur du neurone » et étant de même taille que la matrice de convolution $K$. La matrice de convolution $K$ comprenant les poids synaptiques est commune pour l'ensemble des neurones de la carte de sortie 0 (les poids de la matrice K sont alors dits « poids partagés »). Chaque coefficient de sortie de la matrice de sortie $O_{i,j}$ satisfait alors la formule suivante :

$$O_{i,j} = g\left( \sum_{k=0}^{\min(n-1,I_h-i.s_i)} \sum_{l=0}^{\min(m-1,I_w-j.s_j)} I_{i.s_i+k,j.s_j+l} \cdot K_{k,l} \right)$$

Dans la formule ci-dessus, $g()$ désigne la fonction d'activation du neurone, tandis que $s_i$ et $s_j$ désignent les paramètres de décalage (« stride » en langue anglo-saxone) vertical et horizontal respectivement. Un tel décalage « stride » correspond au décalage entre chaque application du noyau de convolution sur la matrice d'entrée. Par exemple, si le décalage est supérieur ou égal à la taille du noyau, alors il n'y a pas de chevauchement entre chaque application du noyau.

Une carte de sortie $O$ est connectée à une matrice d'entrée $I$ par une opération de « pooling » qui réalise un sous-échantillonnage de la matrice d'entrée, ce qui fournit une matrice sous-échantillonnée.

Le sous-échantillonnage appliqué par chaque couche d'agrégation maximale « Max pooling » peut être défini par l'équation ci-dessous:

$$O_{i,j} = g\left(max_{k=0}^{\min(n-1,I_h - i.s_i)} max_{l=0}^{\min(m-1,I_w - j.s_j)} I_{i.s_i+k,j.s_j+l}\right)$$

Les poids synaptiques associés aux connexions dans le cas d'une couche de « pooling » sont généralement unitaires et n'apparaissent donc pas dans les formules ci-dessus.

Une couche complètement connectée comprend un ensemble de neurones, chaque neurone étant connecté à toutes les entrées de la couche. Chaque neurone $O_j$ dispose de ses propres poids synaptiques $W_{i,j}$ avec les entrées $I_i$ correspondantes et effectue la somme pondérée $h()$ des coefficients d'entrée avec les poids qui est ensuite transmise à la fonction d'activation g() du neurone pour obtenir la sortie du neurone :

$$O_j = g\left(\sum_i I_i.W_{i,j}\right)$$

La fonction d'activation des neurones g() est généralement une fonction sigmoïde, comme par exemple la fonction *tanh*(). Pour les couches de « pooling », la fonction d'activation peut être par exemple la fonction Identité.

Les poids synaptiques peuvent être déterminés par apprentissage. L'apprentissage d'un réseau de neurones consiste à trouver les valeurs optimales des poids synaptiques à partir d'une méthode d'optimisation et d'une base d'apprentissage. Il existe de nombreuses méthodes d'apprentissage tels que la méthode de rétro-propagation du gradient, le principe de base consistant, à partir d'un stimulus en entrée du réseau, à calculer la sortie du réseau, la comparer à la sortie attendue (dans le cas d'un apprentissage dit supervisé) et rétro-propager un signal d'erreur dans le réseau, qui vient modifier les poids synaptiques par une méthode de descente du gradient.

Dans les modes de réalisation de l'invention, le réseau de neurones est « impulsionnel », les valeurs d'entrée et de sortie d'un neurone (neurone dit « neurone impulsionnel ») étant codées avec des impulsions.

Un neurone impulsionnel peut être défini par au moins deux fonctions :

- une fonction d'intégration qui intègre les valeurs en entrée du neurone et peut implémenter une fuite.
- Une fonction d'activation qui prend en paramètres les valeurs de l'intégration et fournit les valeurs de sortie du neurone.

Une fonction d'activation est définie par une fonction algébrique non linéaire, paramétrée, à valeurs bornées, et ayant des variables réelles appelées « entrée » en fonction du modèle de neurone utilisé.

Un neurone est en outre caractérisé par la fonction d'activation g() utilisée pour calculer la réponse d'un neurone (représentant la valeur interne du neurone) à un événement d'entrée, un seuil et des poids synaptiques.

Une valeur d'entrée ou de sortie d'un neurone impulsionnel peut être codée par le nombre d'impulsions reçues par le neurone durant une fenêtre de temps fixée (codage fréquentiel), ou par l'instant d'émission d'une impulsion reçue selon une technique de codage d'ordre de rang. Dans les réseaux de neurones impulsionnels avec codage fréquentiel, le calcul d'une somme pondérée h se fait par accumulation du coefficient du noyau de convolution à chaque arrivée d'une impulsion sur l'entrée correspondante. La fonction d'activation du neurone g peut dans ce cas être remplacée par un seuil. Lorsque la valeur absolue de la somme h dépasse le seuil suite à l'arrivée d'une impulsion sur la sous-matrice d'entrée, le neurone de sortie émet une impulsion du signe de $h$ et remet la somme pondérée $h$ à la valeur 0. Le neurone entre alors dans une période dite « réfractaire » durant laquelle il ne peut plus émettre d'impulsion pendant une période fixée. Les impulsions peuvent par conséquent être positives ou négatives, selon le signe de h lors du dépassement du seuil. Une impulsion négative en entrée inverse le signe du coefficient du noyau correspondant pour l'accumulation.

Le modèle d'un neurone (encore appelé « modèle computationnel de neurones ») est défini par une fonction algébrique non linéaire qui permet de calculer la sortie d'un neurone à partir de la valeur interne du neurone. Cette fonction peut prendre en argument la valeur de l'intégration (représentant la valeur interne à un neurone) mais aussi, selon les modèles, le temps ou la sortie d'un compteur interne. Telle qu'utilisée ici, l'expression « intégration » désigne l'intégrale selon le temps des trains d'impulsions (« spike » en langue anglo-saxone) pondérées en entrée du neurone (i.e. intégrale temporelle d'un train d'impulsions pondérées comme un peigne de Dirac par exemple). La valeur interne d'un neurone (appelée « intégration » ou « valeur d'intégration ») peut être remise à zéro lorsque le neurone se déclenche. Un neurone se « déclenche » lorsqu'il produit une impulsion en sortie.

Les modèles computationnels de neurones impulsionnels définissent le calcul de l'intégration temporelle de l'information. La réponse d'un neurone à une stimulation est le temps d'émission de la prochaine impulsion. Une impulsion est émise en sortie d'un neurone au moment où l'excitation du neurone dépasse le seuil. Une horloge virtuelle peut être utilisée pour temporiser les émissions d'impulsions sur les neurones, les impulsions pouvant alors être considérées comme des événements datés. Il existe plusieurs types de modèles de neurone impulsionnel comme par exemple :

- Le modèle de Hodgkin & Huxley (HH), qui est défini par quatre équations différentielles interdépendantes, qui décrit la dynamique temporelle du neurone par les variations de concentrations ioniques (K+, Ca2+) dans différents compartiments et reproduit les principaux "modes" de fonctionnement du neurone biologique.
- Le modèle Integrate & Fire (IF) qui est décrit par une équation différentielle unique et qui modélise le circuit intégré sous la forme d'un circuit électrique comprenant un condensateur et une résistance électrique (dipôle RC). Dans ce modèle, la dynamique du neurone est décrite par son potentiel de membrane et par l'intensité qui le traverse.
- Des modèles liés au modèle IF tels que le modèle Leaky Integrate & Fire (LIF) ou le modèle Quadratic Integrate&Fire (QIF), le modèle à conductance Integrate & Fire (gIF) ;
- Le modèle Spike Response Model (SRM) qui est basé sur le comportement du neurone (modélisation phénoménologique du neurone) ; ce modèle comprend une fonction noyau fournissant la dynamique du potentiel de membrane du neurone et une fonction calculant la sommation des potentiels post-synaptiques ;
- Le modèle d'izhikevich (Izhikevich, 2003) qui utilise deux équations différentielles couplées pour modéliser les flux d'ions et les dynamiques de potentiel du neurone.

Un neurone impulsionnel réalise dans un premier temps l'intégrale des impulsions pondérées (avec fuite ou non selon le modèle de neurones). Les impulsions peuvent être unitaires de valeur 1 ou -1 (la valeur « -1 » n'est pas toujours utilisé). Les pondérations sont définies par les coefficients du filtre (noyau de convolution). La valeur résultant de l'intégration est notée $I$ : $g(I)$. Classiquement, $g$ peut prendre la forme d'une fonction sigmoïde, comme par exemple la fonction tangente hyperbolique.

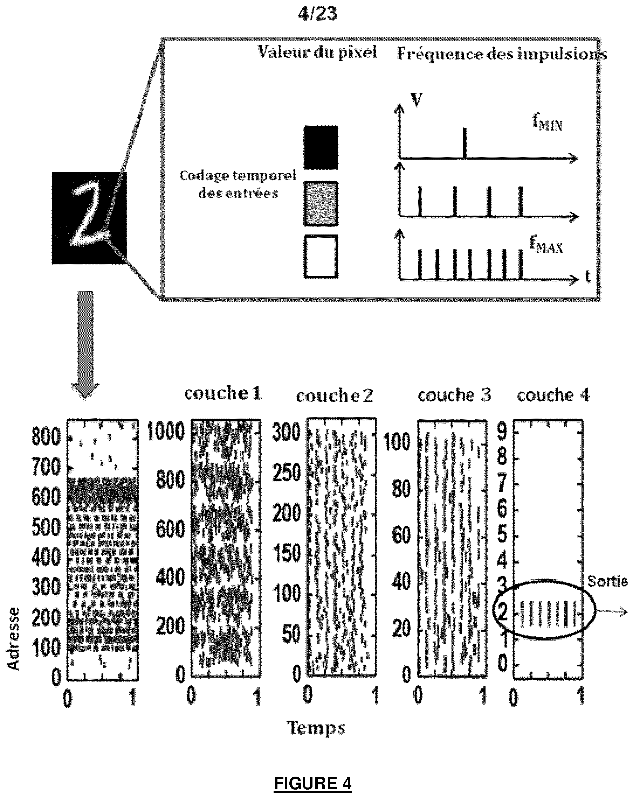

Les réseaux de neurones peuvent être transposés en codage impulsionnel comme illustré sur la figure 4. Dans ce cas, les signaux propagés en entrée et en sortie des couches du réseau ne sont plus des valeurs numériques, mais des impulsions électriques (assimilables à des impulsions Dirac). L'information qui était codée dans la valeur des signaux (normalisé entre -1 et 1) est alors codée temporellement avec l'ordre d'arrivée des impulsions (codage par rang, ou « rank order coding ») ou avec la fréquence des impulsions.

Dans le cas d'un codage par rang, l'instant d'arrivée de l'impulsion est inversement proportionnel à la valeur absolue du signal à coder. Le signe de l'impulsion détermine alors le signe de la valeur du signal à coder.

Dans le cas d'un codage fréquentiel, la fréquence des impulsions, comprise entre $f_{min}$ et $f_{max}$, est proportionnelle à la valeur absolue du signal à coder. Le signe de l'impulsion détermine le signe de la valeur du signal à coder. Par exemple, en considérant une matrice d'entrée du réseau correspondant à la composante de luminance d'une image, normalisée entre 0 et 1, un pixel (ou coefficient de la matrice) blanc, codé par une valeur 1, émettra des impulsions à une fréquence $f_{max}$, un pixel noir, codé par une valeur 0, émettra des impulsions à une fréquence $f_{min}$, tandis qu'un pixel gris, codé par une valeur $x$, émettra des impulsions à une fréquence $f = f_{min} + x(f_{max} - f_{min})$. Le codage peut également être pseudo-fréquentiel, par exemple poissonien : dans ce cas $f_{max}$ et $f_{min}$ représentent des fréquences moyennes uniquement. La phase initiale des impulsions peut être aléatoire.

Les impulsions peuvent également provenir directement d'un capteur, tel qu'une rétine ou une cochlée artificielle, imitant le fonctionnement de leur équivalent biologique.

Dans les modes de réalisation de l'invention, le réseau de neurones convolutionnel considéré est à impulsion recevant les impulsions une à une. En particulier, il peut utiliser un codage fréquentiel. Les couches de « MaxPooling » sont alors utilisées pour sélectionner les signaux de plus grandes fréquences. En variante, le réseau de neurones convolutionnel peut utiliser un codage par phase.

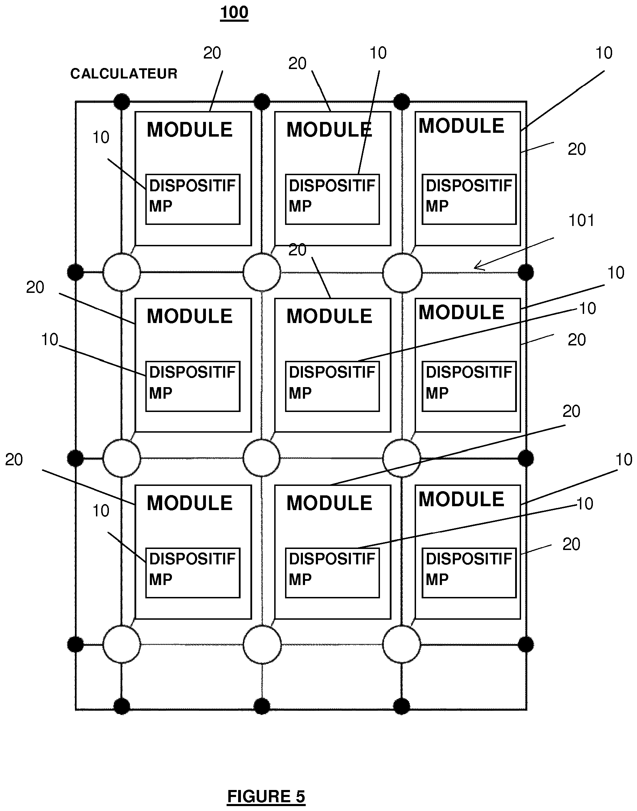

La figure 5 représente schématiquement un calculateur 100 configuré pour calculer au moins une couche de convolution d'un réseau de neurones convolutionnel avec codage impulsionnel, en réponse à un événement d'entrée, le réseau de neurones convolutionnel comprenant au moins un noyau de convolution 12, le noyau de convolution comprenant des coefficients de poids. Le calculateur 100 comprend au moins un module de convolution 20 (encore appelé « bloc de convolution ») configuré pour calculer les réponses des neurones (valeur interne des neurones) de chaque couche de convolution déclenchés par un événement d'entrée, chaque couche de convolution étant constituée d'une ou plusieurs cartes de sortie. La valeur interne des neurones de la couche de convolution déclenchés par un événement d'entrée.

L'entré et la sortie sont des connections au système de réseaux sur puce (NOC), c'est-à-dire qu'il existe au moins une connexion du NOC utilisé pour communiqué avec le calculateur 100. Le formalisme des entré sortie du système 100 est le même que pour les modules 20 c'est-à-dire des événements constitué au minimum d'une valeur adresse.

Chaque module de calcul de convolution 20 peut être configuré pour calculer la valeur interne (encore appelée « valeur d'intégration ») des neurones d'une couche de convolution qui ont reçu une impulsion (événement d'entrée). Lorsque cette valeur d'intégration dépasse un seuil prédéfini, les neurones sont « déclenchés » ou « activés » et émettent un événement de type impulsion en sortie. Le calcul d'une couche de convolution consiste ainsi à déterminer la réponse (valeur de sortie) des neurones de la couche de convolution à un événement d'entrée impulsionnel.

Les modules 20 de calcul de convolution peuvent être interconnectés par un système d'interconnexion 101. Dans un mode de réalisation, les modules de calcul de convolution 20 peuvent être interconnectés en utilisant un système de réseaux sur puce (NOC). Un réseau sur puce permet de rediriger les événements entre les modules et/ou les entrées/sorties. Le réseau assure la connexion entre les différentes couches du réseau de neurones 1. Dans certains modes de réalisation, le réseau sur puce peut implémenter en complément une fonction de gestion des priorités et de synchronisation des événements d'entrée.

La suite de la description sera faite en référence à un système d'interconnexion de type réseau sur puce à titre d'exemple non limitatif. L'homme du métier comprendra cependant aisément que d'autres systèmes d'interconnexion peuvent être utilisés tels que par exemple des systèmes d'interconnexions programmables (e.g. de type FPGA), des systèmes d'interconnexions à routage fixe, etc. Chaque module de calcul de convolution effectue une opération de convolution sur une ou une partie d'une couche du réseau.

Chaque module de convolution 20 peut être utilisé pour calculer les réponses des neurones d'une couche de convolution associée à un noyau de convolution (« filtre »). Dans d'autres modes de réalisation, chaque module de convolution 20 peut être utilisé pour calculer les réponses des neurones de plusieurs couches de convolution. Dans un autre mode de réalisation encore, lorsqu'un module de convolution 20 n'est pas adapté pour calculer toutes les réponses des neurones d'une couche de convolution donnée (i.e. Si le réseau dépasse la capacité d'un module), plusieurs modules de convolution peuvent être utilisés pour calculer les réponses de cette couche de convolution. Le réseau est alors distribué dans un nombre quelconque de modules 20.

Chaque module de convolution 20 peut comprendre un ou plusieurs éléments de calcul, tels que des processeurs ou des sous-calculateurs.

Chaque module de calcul 20 peut calculer la valeur interne d'un ou plusieurs neurones déclenchés par un événement d'entrée, en utilisant les coefficients de poids du noyau de convolution.

Un événement d'entrée est représenté par une impulsion arrivant sur le réseau de neurones. Un réseau de neurones à impulsions peut recevoir dans le temps un train d'impulsions, chaque impulsion pouvant déclencher un ou plusieurs neurones.

Une impulsion représentant un événement d'entrée est définie par une adresse d'entrée sur la couche de convolution.

Telle qu'utilisée ici, « l'adresse d'entrée » d'une impulsion représente l'adresse de l'impulsion émise par la couche de convolution précédente et reçue par la couche de convolution considérée (ainsi l'entrée de la couche considérée est constituée par les sortie de la couche « précédente »). Lorsque les impulsions sont transmises par un bus série, elles propagent donc avec elles au moins leur adresse d'émission.

Lorsqu'une impulsion, définie par une adresse d'entrée, arrive sur une couche de convolution, la connexion entre les neurones de sortie et les neurones d'entrée sur la carte d'entrée est telle que l'impulsion n'est pas reçue par tous les neurones de cette couche. Ainsi, pour une impulsion entrante donnée, il existe des neurones qui ne peuvent pas recevoir cette impulsion, en même temps. De tels neurones sont dits « indépendants ». De plus, le nombre de neurones recevant une même impulsion en même temps est au plus égal à la taille du filtre de convolution associé à la couche de convolution. Ces deux propriétés sont dues à la topologie des réseaux convolutionnels.

Dans certaines applications de l'invention, le calculateur 100 peut être un calculateur multi-coeur à mémoires distribuées, chaque coeur pouvant être interconnecté par le système d'interconnexion 101.

Les différentes couches de convolution 4 du réseau de neurones convolutionnel 1 peuvent être distribuées sur les différents modules 20. En variante, les couches de convolution 4 peuvent être associées à un même module 20 en utilisant des décalages (« offsets ») en z et L et une boucle allant du module de convolution 20 vers lui-même.

Pour calculer la réponse des neurones déclenchés (valeur interne d'un neurone), chaque module de convolution 2 peut utiliser un ou plusieurs modèles computationnels de neurones choisi. Le modèle du neurone peut être défini lors de la programmation du système. Dans certains modes de réalisation, il peut être identique pour tous les neurones d'une couche.

Chaque module de calcul 2 peut être ainsi configuré pour déterminer et délivrer en sortie des valeurs de sortie représentant les valeurs en sortie de chaque neurone indépendant de la couche. La valeur de sortie calculée pour un neurone déclenché donné résulte de l'intégration des valeurs d'entrée reçues par ce neurone dans le temps, pondérée par un coefficient de poids du noyau de convolution. Cette intégration temporelle est déterminée en utilisant la fonction d'activation (encore appelée « fonction de transition ») qui dépend du modèle computationnel de neurone.

Chaque module de calcul 2 peuvent ainsi calculer la valeur de sortie de chaque neurone correspondant à l'intégration temporelle à l'instant t à partir de l'intégration temporelle à t-1 et du coefficient de convolution (coefficient de poids) associé à l'instant t.

Chaque module de calcul 2 peut être connecté à un gestionnaire de sortie pour gérer l'ordre de sortie des évènements, par exemple en mettant en oeuvre forme un système de sérialisation avec une fonction de priorisation. Le protocole série utilisé en sortie peut être quelconque, par exemple AER (acronyme pour Adresse-Event Représentation) signifiant littéralement « Représentation Adresse-Evénement »). Selon la représentation AER, deux neurones connectés partagent un même bus numérique multiplexé temporellement. Un événement est encodé sous forme d'une adresse (tel qu'utilisée ici, une adresse est un identifiant, c'est-à-dire un nombre qui identifie le neurone produisant l'événement) et est transmis sur le bus numérique. Côté réception, l'adresse est encore convertie en impulsions qui sont distribuées sur les neurones récepteurs connectés au neurone émetteur.

Le réseau de neurones convolutionnel avec codage impulsionnel 1 comprend en outre au moins une couche d'agrégation maximale (« MaxPooling ») configurée pour combiner des sorties de la couche de convolution précédente en prenant la valeur maximale.

Un neurone d'une couche d'agrégation maximale classique se déclenche si sa synapse la plus active (i.e. celle qui a reçu le plus d'impulsions, ou autrement dit la synapse dont la fréquence est la plus élevée) reçoit un stimulus, en comparant l'activité de ses synapses pour sélectionner la synapse la plus active. Les modes de réalisation de l'invention permettent de déterminer la réponse d'un neurone d'une couche d'agrégation maximale sans qu'il soit nécessaire pour chacune des N synapses, de décompter chaque impulsion reçue et de stocker l'activité de chaque synapse.

Selon les modes de réalisation de l'invention, au moins un module de convolution 20 parmi les module de convolution 20 du calculateur comprend un dispositif 10 de déclenchement des neurones de chaque couche d'agrégation maximale (dit neurone d'agrégation maximale ou neurone *MP*), le dispositif 10 étant configuré pour déclencher (ou activer) les neurones *MP* de chaque couche d'agrégation maximale qui ont reçu une impulsion d'entrée et déterminer la valeur de l'impulsion de sortie de chaque neurone *MP* en réponse à une impulsion d'entrée reçue par le neurone *MP* en fonction de l'adresse de la synapse du champ récepteur du neurone *MP* qui est activée par l'impulsion d'entrée.

Dans l'exemple de la figure 5, chaque module de convolution 20 comprend un dispositif 10 de déclenchement des neurones *MP*.

Le dispositif 10 de calcul d'agrégation maximale (encore appelé ci-après « dispositif de calcul d'agrégation maximale » ou encore « dispositif d'agrégation maximale ») calcule ainsi la réponse (valeur de sortie) d'un neurone *MP* d'une couche d'agrégation maximal à une impulsion d'entrée.

Le dispositif de calcul d'agrégation maximale 10 est configuré pour ne générer un événement de sortie que si l'adresse de l'événement d'entrée reçu par le neurone *MP* correspond à l'adresse la plus active dans l'agrégation (« pool »).

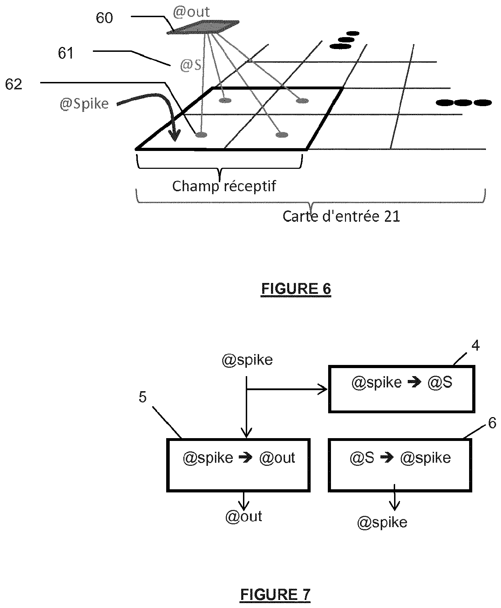

La figure 6 représente un exemple de connexion d'un neurone *MP* pour un champ récepteur de taille 2*2 d'une matrice d'entrée 21.

Chaque couche d'agrégation maximale comprend un ensemble de neurones 60 dit neurones d' « agrégation maximale » (Max Pooling) ou neurones *MP*. Les neurones *MP* d'une couche de « MaxPooling » sont reliés en entrée à *N* synapses 61 numérotés de 0 à *N* - 1. L'adresse de chaque synapse est désignée ci-après par @*S*.

En réponse à la réception d'une impulsion par une synapse d'adresse @*S*, le dispositif de calcul d'agrégation maximale 10 est configuré pour déterminer si l'adresse de la synapse activée correspond au moins une adresse de référence @*Smax,* correspondant à l'adresse de la synapse la plus active dans la couche d'agrégation maximale (@*S* = @*Smax)*. Si la condition est vérifiée, le dispositif 10 déclenche le neurone *MP* relié à la synapse d'adresse @S ayant reçu l'impulsion d'entrée.

Selon les modes de réalisation de l'invention, chaque adresse @*Smax* de synapse la plus active (encore appelée adresse de référence) peut être calculée dynamiquement à chaque fois qu'une impulsion d'entrée est reçue par une couche, pour déterminer si un neurone *MP* doit être déclenché.

Chaque neurone *MP* a une adresse de sortie unique notée @*out* (identifiant de neurone), cette adresse étant utilisée pour l'identifier lorsqu'il se déclenche. Un neurone *MP* d'une couche d'agrégation maximale se déclenche à la réception d'une impulsion sur sa synapse la plus active.

Pour un neurone donné la relation entre l'adresse de l'impulsion 62, notée « @*spike* », et l'adresse de la synapse (@*s*) activé par cette impulsion dépend du champ de réception du neurone sur la carte d'entrée comme illustré sur la figure 6.

L'adresse @*spike* correspond à l'adresse du neurone de la couche précédente qui a émis l'impulsion, autrement dit à l'adresse du neurone d'entrée dans le champ réceptif.

Les modes de réalisation de l'invention permettent de déclencher un neurone *MP* et de déterminer la valeur de l'impulsion de sortie de neurone *MP* en sélectionnant la synapse la plus active d'un champ réceptif du neurone *MP,* sans qu'il soit nécessaire de calculer l'adresse de sortie d'un neurone déclenché @*out* ou la relation entre l'adresse de l'impulsion @*Spike* et l'adresse de la synapse @*S*.

La figure 7 représente un schéma illustrant l'acheminement d'une impulsion d'entrée d'adresse « @*spike* » reçue dans le champ récepteur d'un neurone *MP* d'adresse « @*out* » en activant une synapse d'adresse « @*S* » fonctionnement du dispositif 10 de déclenchement de neurone d'agrégation maximal selon certains modes de réalisation.

La figure 7 montre 3 blocs, l'ensemble des blocs recevant une impulsion d'entrée d'adresse @*spike* et délivrant un neurone déclenché d'adresse @*out* et une impulsion de sortie d'adresse @*spike :*

- @*spike* → @*S* : représentant les adresses de synapse @*S* ayant reçu une impulsion d'entrée ;
- @*S* → @*out* : représentant un neurone *MP* ayant reçu une impulsion d'entrées ayant activé une synapse @S
- @*S* → @*spike* : représentant une impulsion de sortie d'un neurone *MP* déclenché et ayant reçu une impulsion d'entrée ayant activé une synapse @*S*.

Le dispositif 10 de calcul d'agrégation maximale est configuré pour recevoir une à une les adresses de synapse @S ayant reçu une impulsion (bloc 4 noté « @*spike* → @*S* »).

En réponse à la réception d'une impulsion sur un neurone *MP,* le dispositif 10 est configuré pour déterminer au moins une adresse de la synapse la plus active (encore appelée « adresse de la synapse maximale » ou « adresse de référence ») @Smax, en maintenant une variable interne D représentant la « dureté » de la synapse maximale (dite « valeur de dureté » ou « indicateur d'activité de synapse »). La variable de dureté représente l'activité différentielle (en terme d'impulsions reçues) de la synapse par rapport aux autres synapses.

S'il est déterminé que l'adresse de la synapse activée @S est égale à au moins une adresse de référence @Smax, le neurone *MP* est déclenché et un signal d'impulsion est émis en sortie du neurone.

Pour une couche d'agrégation maximale entièrement connectée (« Fully Connected » ou FC), le bloc 4 noté « @*spike* → @*S* » n'intervient pas car l'adresse de l'impulsion est égale à l'adresse de la synapse (@*spike* = @*S*). Pour les autres types de connexion de couche d'agrégation maximale, le bloc 4 « @*spike* → @*S* » peut être représenté par la mémoire dans laquelle sont stockées les poids synaptiques. Dans un tel mode de réalisation, il est avantageux que les poids synaptiques ne soient pas redondants et donc que la précision synaptique soit suffisante ($2^{précision} \geq N$).

Le bloc 5 « @*spike* → @*out* » fournit l'adresse @*out* du neurone de sortie en réponse à l'impulsion d'entrée d'adresse @*spike* . Le bloc 6 « @*spike* → @*out* » peut être dépendant du type de réseau de neurones.

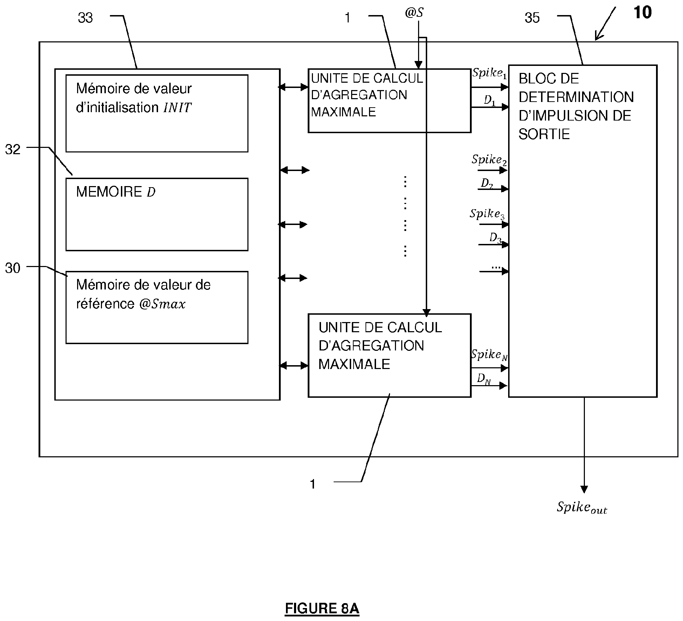

La figure 8A représente le dispositif de calcul d'agrégation maximale 10 selon un mode de réalisation.

En réponse à la réception d'une impulsion d'entrée sur une synapse du champ récepteur du neurone *MP,* le dispositif de calcul d'agrégation maximale 10 peut être configuré pour déterminer si l'adresse de la synapse reçue @S correspond à au moins une adresse de référence @*Smax* stockées. Chaque adresse de référence @*Smax*$_i$ est associée à une valeur de dureté $D_i$. S'il est déterminé que l'adresse de la synapse activée @S est égale à l'une des adresses de l'ensemble d'adresses de référence @*Smax*$_k$, et que la valeur de dureté $D_k$ associé à cette adresse de référence @*Smax*$_k$ a la valeur la plus grande parmi les valeurs des compteurs de dureté associées aux autres adresses de référence de l'ensemble, le dispositif déclenche le neurone *MP* en émettant une impulsion de sortie $Spike_{out}$.

Dans un mode de réalisation, un ensemble de P adresses de référence @***Smax**$_i$* peuvent être stockées dans les différentes mémoires 31 (soit **N** mémoires 31), l'ensemble comprenant au moins deux adresse de référence (P > 1). Avantageusement, P est compris entre 1 et N-1, N désignant le nombre de synapses. Chaque adresse de référence @***Smax**$_i$* est associée à un compteur de dureté **$D_i$** et à un neurone de couche d'agrégation maximale ***MP**$_i$*. Dans un tel mode de réalisation :

- les mémoires 30 peut être représentées par une structure de données telle qu'une table @***Smax**[ ]* (encore appelée « table d'adresses de référence ») pour stocker les ***P*** adresses de référence @***Smax**$_i$* = @***Smax**[i ]* , chaque entrée de la table associée à un indice ***i*** fournissant la ième adresse de référence @***Smax**$_i$,*
- les compteurs 32 peuvent être représentés par une structure de données telle qu'une table (encore appelée « table de duretés ») pour stocker les P compteurs de dureté $D_i$, chaque entrée de la table de duretés D[ ] associée à un indice *i* fournissant la *ième* adresse de référence @***Smax**$_i$*, la *ième* valeur de dureté $D_i$ = D[i] étant associé à la *ième* adresse de référence @***Smax**$_i$ ;*
- les mémoires 33 peuvent être représentées par une structure de données telle qu'une table (encore appelée « table d'initialisation ») pour stocker N valeurs d'initialisation *INIT*$_i$, chaque entrée de la table d'initialisation *INIT*[ ] associée à un indice i fournissant la *ième* adresse de référence *INIT*$_i$ = *INIT*[i ], la *ième* valeur d'initialisation *INIT*$_i$ étant associé à la *ième* adresse de référence @***Smax**$_i$* et au *ième* compteur de dureté $D_i$.

Dans un tel mode de réalisation, une impulsion de sortie peut être déterminée pour chaque adresse de référence @*Smax*$_i$. Une structure de données telle qu'une table (encore appelée « table d'impulsion de sortie ») peut être utilisée pour stocker les N valeurs d'impulsions de sortie *Spike*$_i$, chaque entrée de la table d'impulsion de sortie associée à un indice i fournissant la *ième* valeur d'impulsion de sortie *Spike*$_i$ = *Spike*[i ], la *ième* valeur d'impulsion de sortie étant associé à la *ième* adresse de référence @*Smax*$_i$ et au *ième* compteur de dureté $D_i$.

Selon les modes de réalisation de l'invention, le dispositif de calcul d'agrégation maximale 10 peut comprendre :

- au moins une mémoire 30 configurée pour stocker au moins une adresse de référence @*Smax*$_k$ de la synapse couramment la plus active.
- une mémoire 32 associé à la mémoire 30 pour stocker une valeur de « dureté » $D_k$ en association avec chaque adresse de référence @*Smax*$_k$ ; la mémoire 32 représente l'intégration du neurone ;

- une mémoire $INIT_k$ 33 configurée pour stocker la valeur d'initialisation de chaque valeur de « dureté » $D_k$, la valeur d'initialisation étant affectée à la valeur de dureté $D_k$ lorsque l'adresse de référence $@Smax_k$ est modifiée.
- au moins une unité d'agrégation maximale 1 configurée pour déterminer une impulsion de sortie élémentaire d'un neurone $MP$ à une impulsion d'entrée.
- un bloc de détermination d'impulsion de sortie 35 configurée pour déterminer l'impulsion de sortie du neurone $Spike_{out}$ en fonction des impulsions de sortie élémentaires.

Dans certains modes de réalisation, le dispositif 10 peut comprendre une unité d'agrégation maximale 1 associée à chaque paire comprenant une adresse de référence $@Smax_k$ et la valeur de dureté $D_k$ associée. En variante, une unique unité d'agrégation maximale 1 peut être utilisée. La suite de la description sera faite en référence à une unité d'agrégation maximale 1 unique associée à chaque paire comprenant une adresse de référence $@Smax_k$ et la valeur de dureté $D_k$ associée.

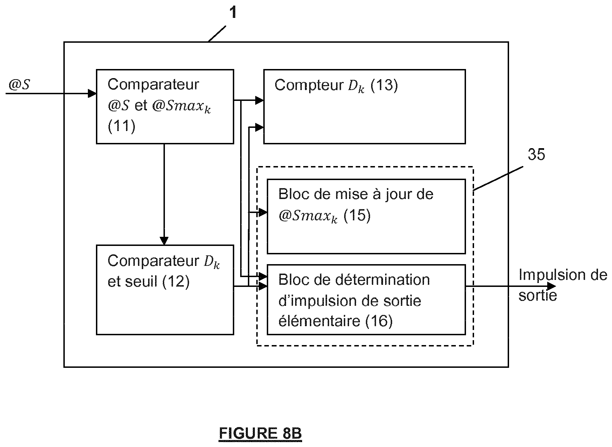

En référence à la figure 8B, chaque unité d'agrégation maximale 1 peut comprendre :

- un comparateur d'adresse 11 configuré pour comparer l'adresse $@Smax_k$ de référence à l'adresse $@S$ de la synapse activée ;
- un comparateur de valeur de dureté 12 configuré pour comparer la valeur de dureté $D_i$ associée à un seuil $S$ prédéfini ;
- un compteur 13 configuré pour mettre à jour la valeur de dureté en fonction des résultats de comparaison retournés par les comparateurs 11 et 12 ;
- un bloc de mise à jour d'adresse de référence 15 configuré pour mettre une adresse $@Smax_k$ de référence à l'adresse $@S$ de la synapse activée en fonction des résultats des comparaisons des comparateurs 11 et 12 ;
- un bloc de détermination d'impulsion de sortie élémentaire 16 configuré pour déterminer une valeur d'impulsion de sortie élémentaire pour la paire $\{@Smax_k, D_k\}$.

Dans un mode de réalisation préféré, le seuil S utilisé par le comparateur de valeur de dureté 12 pour comparer la valeur de dureté $D_i$ à ce seuil a une valeur égale à zéro ($S = 0$). La suite de la description sera faite à référence à un seuil de comparaison S fixé à 0 pour la comparaison des valeurs de dureté, à titre d'exemple non limitatif.

Le compteur 13 permet de mesurer l'activité différentielle entre la synapse qui est actuellement la plus active et les autres synapses.

La valeur interne du neurone MP (encore appelée « intégration du neurone »), représentée par la mémoire 32 stockant les valeurs de dureté $D_k$, peut être incrémentée d'une valeur d'incrément choisie $a$ si l'adresse de la synapse activée $@S$ correspond à une des adresses de référence $@Smax$ stockées, ou décrémentée d'une valeur de décrémentation $b$ choisie si l'adresse de la synapse activée $@S$ ne correspond à aucune des adresses de référence $@Smax$ stockées, ou mise à une valeur d'initialisation INIT en fonction des résultats des comparaisons effectuées par les comparateurs 11 et 12.

La valeur $b$ représente une valeur de « pénalité » tandis que la valeur $a$ représente une valeur de « récompense ». Les valeurs $a$ et $b$ peuvent être identiques ou différentes. Dans un mode de réalisation, les valeurs $a$ et/ou $b$ représentent une valeur entière. Lorsque le dispositif d'agrégation maximale comprend plusieurs paires d'adresse de référence/valeur de dureté, les valeurs a et b appliquées pour mettre à jour les compteurs 32 peuvent être différente d'un compteur 13 à l'autre.

Lorsque les valeurs de pénalité/avantage $a$ et $b$ appliquées aux compteurs de dureté sont différentes pour tous les compteurs 13 de valeur de dureté $D_i$, le dispositif 10 peut comprendre une mémoire stockant les valeurs de pénalité/avantage sous la forme d'une structure de données, telle qu'une table, chaque entrée de la table d'initialisation associée à un indice i stockant une $ième$ paire $\{a_i, b_i\}$ comprenant la valeur de pénalité $b_i$ et la valeur de récompense $a_i$ associées au $ième$ compteur de dureté $D_i$.

Lorsqu'une valeur de dureté $D_i$ dans la mémoire 32 atteint la valeur zéro, le bloc de mise à jour d'adresse de référence 15 peut être configuré pour remplacer l'adresse de référence $@Smax$ associée par l'adresse de la synapse activée $@S$ et pour mettre la valeur de dureté $D$ du compteur 13 associé (intégration du neurone) à la taille du noyau de la couche d'agrégation.

Dans un exemple de réalisation, les valeurs de pénalité et de récompense a et b peuvent être égales à 1, tandis que la valeur d'initialisation **INIT** de la dureté peut être égale au nombre de synapses **P.**

Le bloc de détermination d'impulsion de sortie 35 peut être configuré pour déterminer l'impulsion de sortie du neurone $Spike_{out}$ à la valeur de l'impulsion de sortie correspondant à l'adresse '$@max(D_k)$' correspondant à la valeur de dureté maximale $D_k$, soit $Spike_{out} = spike\ [@max(D_k)]$.

Dans certains mode de réalisation, certaines ou toutes les mémoires d'adresse de référence 32, de valeurs de dureté 30 et de valeurs d'initialisation 31 peuvent être incluses dans la mémoire du calculateur 100 stockant la valeur interne d'un neurone $MP$.

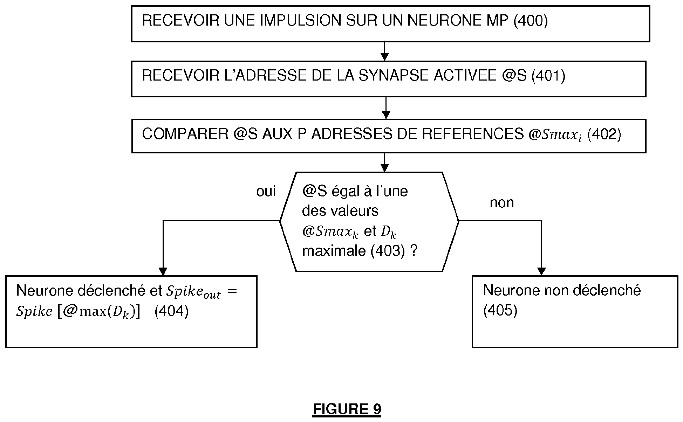

La figure 9 illustre le procédé de déclenchement des neurones $MP$, en réponse à une impulsion d'entrée reçue par un ou plusieurs neurones d'agrégation, selon certains modes de réalisation.

En réponse à une impulsion d'entrée reçue par un neurone d'agrégation, le procédé de déclenchement d'un neurone **MP** active ou déclenche le neurone MP si l'adresse de la synapse activée @S est égale à l'une des adresses de référence @*Smax$_i$* (encore notée@*Smax*[*i*] lorsque les adresses de référence sont stockées dans une table @*Smax*[ ]) et que la valeur de dureté **$D_i$** (encore notée **$D$**[*i*] lorsque les adresses de référence sont stockées dans une table **$D$**[ ]) associée à cette adresse de référence @*Smax$_i$* a la valeur la plus grande parmi les valeurs de dureté associées aux autres adresses de référence de l'ensemble. Sinon, le neurone n'est pas activé.

Le procédé peut générer un signal (impulsion de sortie *Spike$_{out}$*) à la couche de convolution suivante, en réponse au déclenchement du neurone *MP*.

Plus précisément, à l'étape 400, l'adresse de la synapse associée à l'impulsion d'entrée reçue @S, dite adresse de synapse activée, est reçue.

A l'étape 402, l'adresse de la synapse activée @S est comparée avec les *P* adresses de l'ensemble d'adresses de référence @*Smax$_i$*, avec *P* compris entre 1 et N-1 , chaque adresse de référence @*Smax$_i$* étant associée à une valeur de dureté $D_i$, et à un neurone d'agrégation.

Si l'adresse de la synapse activée @S est égale à l'une des *P* adresses de l'ensemble d'adresses de référence @*Smax$_k$*, et que la valeur de dureté $D_k$ associé à cette adresse de référence @*Smax$_k$* a la valeur la plus grande parmi les valeurs de dureté $D_k$ associées aux autres adresses de référence de l'ensemble (bloc 403), le neurone MP associé est déclenché et l'impulsion de sortie *Spike$_{out}$* est mise à la valeur de l'impulsion de sortie correspondant à l'adresse '@max($D_k$)' du compteur $D_k$ à l'étape 404, soit *Spike$_{out}$* = *Spike* [@max($D_k$)].

Si la condition de l'étape 404 n'est pas vérifiée, le neurone n'est pas activé (étape 405). Dans ce cas les valeurs de dureté $D_i$ et les valeurs de dureté @*Smax$_i$* peuvent être mises à jour en fonction de la comparaison de chaque valeur de dureté $D_i$ par rapport à zéro ('0').

Dans certains modes de réalisation, la valeur $D_i$ de dureté associée aux adresses de référence @*Smax$_i$* de l'ensemble de référence peut être décrémentée d'une valeur de décrémentation $b_k$ si l'adresse de la synapse activée @S est distincte de l'adresse de référence @*Smax$_i$* et que la valeur de dureté $D_i$ est inférieure ou égale à zéro.

Si l'adresse de la synapse activée @S est distincte de l'adresse de référence @*Smax$_i$* et que la valeur de dureté $D_i$ est strictement supérieure à zéro, l'adresse de référence @*Smax$_i$* peut être mise à la valeur de la synapse activée @S (@*Smax$_i$* = @S ), tandis que la valeur $D_i$ de dureté $D_i$ associée aux adresses de référence @*Smax$_i$* de l'ensemble de référence peut être mise à la valeur d'initialisation associée *INIT$_i$* ($D_i$ = *INIT$_i$*).

Dans un mode de réalisation, l'étape 404 peut en outre comprendre l'incrémentation de la valeur de dureté $D_k$ associé à l'adresse de référence @*Smax$_k$* qui a la valeur la plus grande parmi les valeurs de dureté, la valeur de dureté étant incrémenté d'une valeur $a_k$.

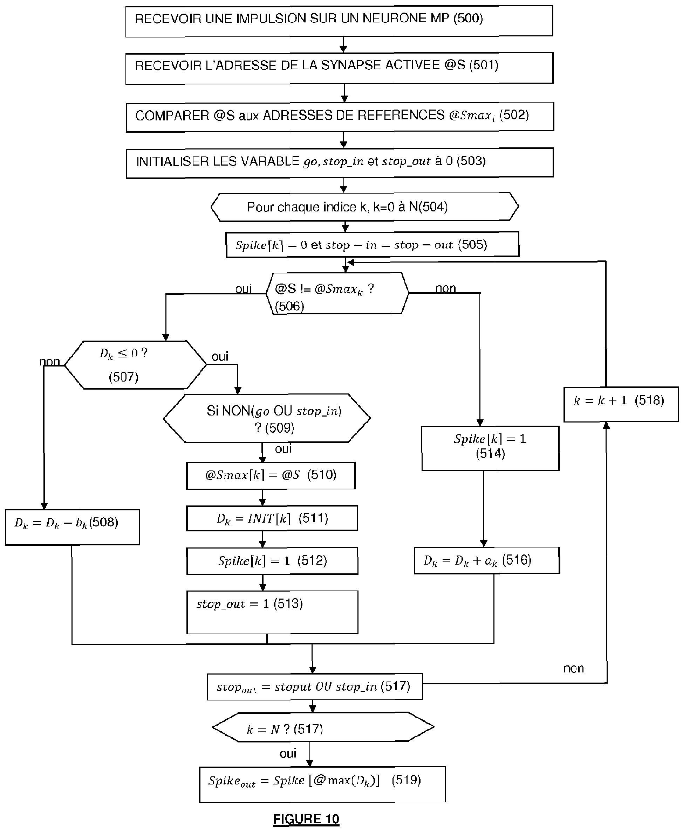

La figure 10 est un organigramme décrivant un exemple d'implémentation du procédé de déclenchement d'un neurone *MP* d'une couche d'agrégation Maximale, selon un mode de réalisation.

A l'étape 500, une impulsion est reçue sur un neurone *MP*.

A l'étape 501, l'adresse de la synapse @S associée à l'impulsion d'entrée (adresse de la synapse activée) est reçue.

A l'étape 502, l'adresse de la synapse activée @S est comparée à l'ensemble d'adresses de référence @*Smax$_i$*.

A l'étape 503, des paramètres booléens *go, stop_in* et *stop_out* sont initialisés à zéro. Le paramètre *go*, dit « paramètre d'activation générale », prend la valeur un ('1'), si l'adresse de la synapse activée est déjà comprise dans la table des adresses de référence *Smax*[ ], et la valeur zéro ('0') sinon. Les paramètres *stop_in* et *stop_out* représentent des paramètres de contrôle, encore appelés « paramètre d'inhibition », associés à chaque unité de déclenchement 1 et aptes à inhiber ou bloquer le fonctionnement d'une unité de déclenchement 1 adjacente en fonction de la valeur de ces paramètres. Le paramètre *stop_in* est un paramètre d'entrée d'inhibition et le paramètre *stop_out* est un paramètre de sortie d'inhibition.

De tels paramètres évitent à deux unités de déclenchement 1 d'avoir la même valeur d'adresse de référence @Smax. Ainsi, si l'un des unités de déclenchement 1 change sa valeur d'adresse de référence @Smax, elle empêche toutes les autres unités 1 situées à sa droite de changer la valeur de leur adresse de référence associée @Smax en mettant le paramètre *stop_out* à la valeur 1 (*stop_out* = 1). La sauvegarde des adresses de référence @Smax fait ainsi l'objet de priorité : dans l'exemple des figures, plus une unité de déclenchement est située à gauche dans le circuit, plus elle est prioritaire pour le changement de son adresse de référence associée @Smax.

Pour chaque indice k allant de 1 à P (bloc 504), la valeur de sortie de l'impulsion est initialisée à zéro ('0') et le paramètre *stop_in* est mis à la valeur du paramètre *stop_out* à l'étape 505.

A l'étape 506, il est déterminé si l'adresse de la synapse activée @S est différente à une adresse de référence @*Smax$_i$* de l'ensemble d'adresses de référence.

S'il est déterminé que l'adresse de la synapse activée @S est différente des adresses de référence @*Smax$_i$* de l'ensemble d'adresses de référence (bloc 506), il est déterminé à l'étape 507 si l'une des adresses de référence @*Smax$_i$* est associée à un compteur de dureté $D_i$ ayant une valeur inférieure ou égale à zéro *($D_k \leq 0$)*.

Pour chaque adresse de référence@$Smax_k$, associée à un compteur de dureté $D_k$ ayant une valeur inférieure ou égale à zéro ($D_k \leq 0$), l'adresse de référence @$Smax_k$ est mise à la valeur de l'adresse de la synapse activée @S, associée au compteur de dureté$D_k$, si l'adresse de la synapse activée n'est pas déjà stockée dans les mémoires 31, comme vérifié à l'étape 509 (par exemple dans la table@$Smax$[ ]) : @$Smax$[k] = @S). Dans un tel cas, l'adresse de synapse activée @S n'a pas déjà été enregistrée (go = 0) par une unité de déclenchement 1 et n'est pas en cours d'enregistrement par une unité de déclenchement 1 située plus à gauche (stop_in = 0). Elle peut donc être enregistrée par une unité de déclenchement 1 comme l'adresse de référence @Smax associée à cette unité 1, si sa valeur de dureté D associée est inférieure ou égale à 0.

A l'étape 511, la valeur de dureté $D_k$ associée à l'adresse de référence @$Smax_k$ est mise à la valeur d'initialisation INIT[k] prédéfinie.

A l'étape 512, la valeur de l'impulsion de sortie est mise à un ('1') pour l'indice k considéré, soit Spike[k] = 1.

A l'étape 513, le paramètre stop-out est mis à un (stop_out = 1).

S'il est déterminé à l'étape 507 que l'adresse de référence @$Smax_i$ est associée à un compteur de dureté $D_k$ ayant une valeur strictement supérieur à zéro ($D_k > 0$), à l'étape 508, la valeur de dureté $D_k$ est diminuée d'une valeur de décrémentation choisie $b_k$.

S'il est déterminé à l'étape 506 que l'adresse de la synapse activée @S est égale à l'adresse de référence @$Smax_k$, la valeur de l'impulsion de sortie est mise à un ('1') pour l'indice k considéré, soit Spike[k] = 1 à l'étape 515.

A l'étape 516, la valeur de dureté $D_k$ associée à l'adresse de référence est ensuite incrémentée d'une valeur d'incrémentation $a_k$.

A l'étape 517, le paramètre booléen stop_out est mis a la valeur 'stop_out OU stop_in', autrement dit :

- $stop_{out}$ = 0 si la valeur courante de stop_out est égale à zéro ('0') ET que la valeur courante de stop_in' est égale à zéro ('0') ;
- $stop_{out}$ = 1 sinon.

Les étapes 506 à 517 sont réitérées pour tous les indices k (étapes 518 et 519).

Lorsque que toutes les adresses de référence ont été comparées (si k = N à l'étape 518), le neurone est déclenché si le paramètre stopout est égale à un ('1'), la valeur de l'impulsion de sortie $Spike_{out}$ = Spike[@ max(D[ ])] étant la valeur d'impulsion associée à l'adresse @max(D[ ]) correspondant au compteur $D_i$ ayant la valeur maximal $D_i$ = $\max_{k=1 \text{ à } P}(D_k)$ = max(D[ ]). L'adresse @max(D[ ]) est de taille log2(N) bits.

Dans un mode de réalisation particulier, une seule adresse de référence @$Smax$ associée à un compteur de dureté $D$ et à un neurone MP est utilisée.

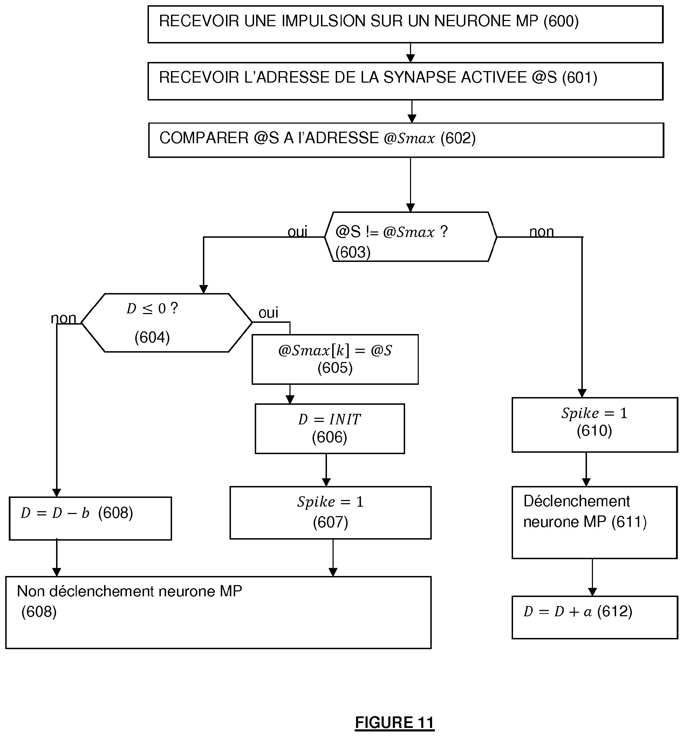

La figure 11 est un organigramme représentant le procédé de déclenchement d'un neurone MP d'une couche d'agrégation maximale (« Max Pooling »), selon un tel mode de réalisation utilisant une unique adresse de référence @$Smax$ associée à un compteur de dureté $D$ et à un neurone MP.

A l'étape 600, une impulsion est reçue sur un neurone MP.

A l'étape 601, l'adresse de la synapse @$S$ associée à l'impulsion d'entrée (adresse de la synapse activée) est reçue.

A l'étape 602, il est déterminé si la valeur de l'impulsion d'entrée reçue (« spike ») est égale à 0 (spike = 0).

Si la valeur de l'impulsion d'entrée reçue (« spike ») est égale à 0, il est déterminé à l'étape 603 si l'adresse @$S$ de la synapse activée par l'impulsion d'entrée est différente de l'adresse de synapse maximale @$Smax$ stockée en mémoire.

Si l'adresse @$S$ de la synapse activée par l'impulsion d'entrée est différente de l'adresse de synapse maximale @$Smax$ stockée en mémoire (@$S$ ! = @$Smax$), à l'étape 604, il est déterminé si la valeur courante du compteur $D$ est inférieure égale à 0 ($D \leq 0$). D est de taille $C$ (en bits)

Si la valeur courante du compteur $D$ est inférieure égale à 0 ($D \leq 0$), à l'étape 605, l'adresse @$Smax$ stockée en mémoire est mise à la valeur de l'adresse de la synapse activée @$S$ (@$Smax$ = @$S$).

Par ailleurs, à l'étape 606, la dureté $D$ est initialisée à la valeur d'initialisation prédéfinie INIT.

A l'étape 607, la valeur de l'impulsion de sortie Spike est mise à un ('1'), soit Spike = 1. Le neurone n'est pas déclenché (bloc 608)

S'il est déterminé à l'étape 604 que la valeur courante du compteur $D$ est strictement supérieure à 0 ($D > 0$), la valeur de dureté $D$ est décrémentée de la valeur b à l'étape 609. Le neurone n'est pas déclenché (bloc 608).

S'il est déterminé à l'étape 603 que l'adresse @$S$ de la synapse activée est égale à l'adresse de référence @$Smax$ (@$S$ = @$Smax$), à l'étape 610, la valeur de l'impulsion « spike » en sortie du neurone MP est ensuite mise à 1 (spike = 1) et le neurone MP est déclenché (bloc 611). A l'étape 612, la valeur courante du compteur $D$ est incrémentée de la valeur a.

Le procédé de déclenchement des neurones d'une couche d'agrégation maximale (MAX - Pooling) peut être implémenté sous forme logicielle et/ou matérielle, et en particulier sous la forme d'un circuit numérique ou analogique.

Bien que les organigrammes des figures 9 à 11 montrent des étapes successives, l'homme du métier comprendra aisément que certaines au moins des étapes de ces figures peuvent être alternativement exécutées en parallèle ou selon un ordre différent.

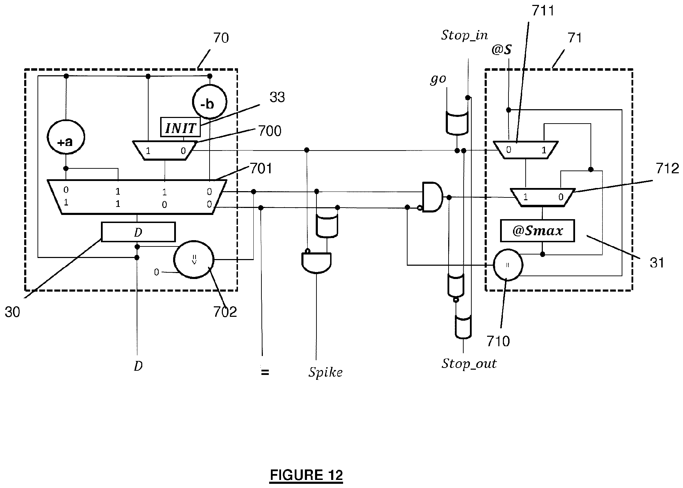

La figure 12 représente le dispositif de déclenchement d'un neurone d'une couche d'agrégation maximale (MAX-Pooling) 10 sous la forme d'un circuit numérique, selon un exemple de réalisation avec **P = 1** (une seule unité de calcul d'agrégation maximale).

Le circuit comprend la mémoire d'adresse de référence 30, la mémoire stockant la valeur de dureté 32 et la mémoire stockant la valeur d'initialisation 33.

Le circuit 10 comprend un bloc compteur 70 configuré pour sélectionner la valeur de pénalité -*b*, de récompense +*a*, ou la valeur d'initialisation *INIT* et mettre à jour la valeur de dureté *D* en fonction de la comparaison entre l'adresse de synapse activé @S et l'adresse de référence @*Smax* et du signe de la valeur de dureté *D*.

Le bloc 70 comprend un multiplexeur 700 réalisant l'initialisation de la valeur de dureté D et un multiplexeur 701 configuré pour incrémenter ou décrémenter la valeur de dureté D. Le bloc 70 comprend en outre un comparateur 702 pour comparer la valeur de dureté D à zéro.

La comparaison entre l'adresse de synapse activée @S et l'adresse de référence @*Smax* est réalisée avec un bloc comparateur 71 comprenant un comparateur 710. Les résultats du bloc comparateur 71 permettent d'activer le bloc compteur 70 pour mettre à jour la dureté D.

Des portes logique ET ainsi que OU (entre les blocs 70 et 71) permettent de mettre à jour l'impulsion de sortie (*spike*), le signal *stop_out* en fonction des résultats des comparaisons effectuées par les blocs 70, 71, des signaux d'entrée *go* et/ou *stop_in*.

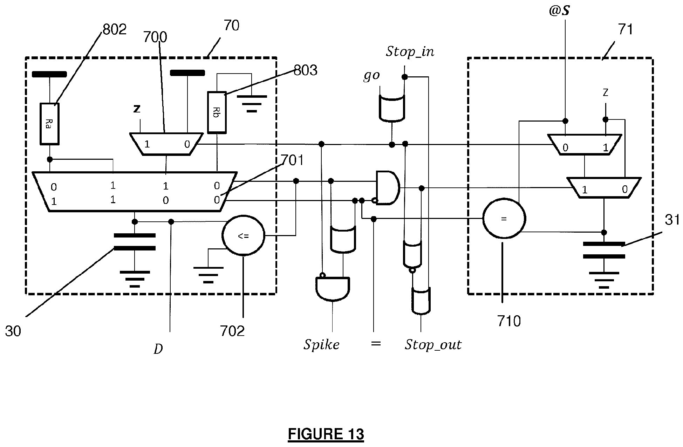

La figure 13 est un circuit analogique représentant un exemple d'implémentation du procédé de déclenchement d'un neurone d'une couche d'agrégation maximale (MAX-Pooling) selon un autre mode de réalisation.

La figure 13 est fonctionnellement similaire à la figure 12, avec un bloc de test et de mise à jour de la valeur de dureté 70 et un bloc de comparaison 71 pour comparer l'adresse de synapse activé @S et l'adresse de référence @*Smax*. Cependant, dans la figure 13, ces blocs sont implémentés sous forme analogique (signaux analogiques). En particulier, les valeurs de pénalité/avantage a et b sont implémentées avec des résistances 802 et 803 tandis que les mémoires 30, 31 stockant @Smax, D sont implémentées par des condensateurs.

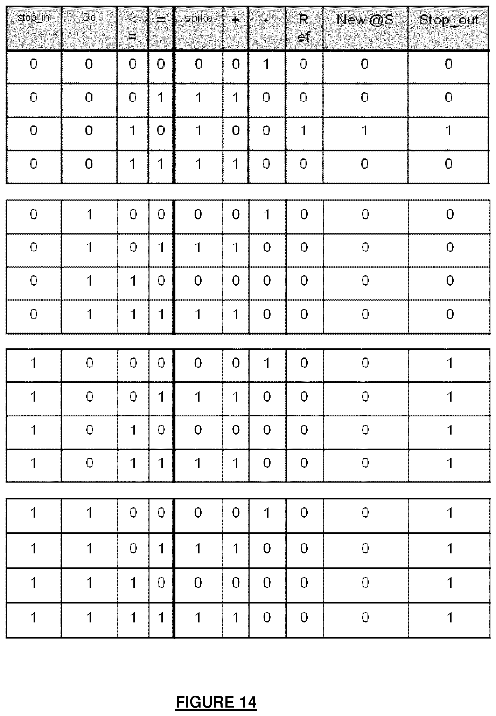

La figure 14 montre la table de correspondance (« Look-Up Table » en langue anglo-saxonne) correspondant aux différents signaux du circuit numérique de la figure 12 :

- '*stop - in*': représentant un paramètre d'entrée d'inhibition ;

- *Go* : représentant un paramètre d'activation générale ;

- « <= » : représentant le comparateur de valeur de dureté ;

- « *spike* » : représentant la valeur de l'"impulsion d'entrée ou de sortie du neurone ;

- « + » : représentant l'additionneur pour la valeur de récompense a ;

- « -»: représentant le soustracteur pour la valeur de pénalité b ;

- '*INIT*' représentant la valeur d'initialisation ;

- '*New@S*' représentant une nouvelle synapse activée ;

- '*stop_out*': représentant un paramètre de sortie d'inhibition.

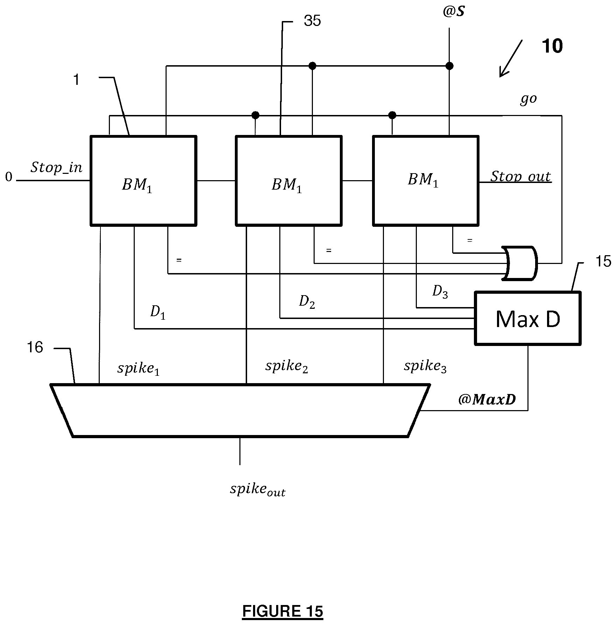

La figure 15 est une représentation sous forme d'un circuit numérique du dispositif 10 de déclenchement de neurones *MP* d'agrégation maximale, selon un mode de réalisation. Le dispositif 10 comprend P unités d'agrégation maximale 1, chacune associée à une adresse de référence @$Smax_k$, une valeur de dureté $D_k$ et à une valeur d'initialisation $INIT_k$. Dans l'exemple de la figure 15, $P = 3$ unités d'agrégation maximale 1 sont utilisées (encore notées $BM_1$, $BM_2$, $BM_3$). Chaque unité $BM_i$ est associée à une adresse de référence @$Smax_i$ (@$Smax_1$, @$Smax_2$, @$Smax_2$), et peut être configurée pour calculer les impulsions de sortie $Spike_i$ et mettre à jour les valeurs de dureté $D_i$ ($D_1$, $D_2$, $D_3$), en fonction à du résultat de la comparaison de l'adresse de la synapse activée @S avec l'adresse de référence associée @$Smax_i$ et/ou du résultat de la comparaison de la valeur courante de la valeur de dureté $D_i$ avec le seuil prédéfini S comme décrit ci-avant.

En réponse à la réception d'une impulsion d'entrée sur une synapse du champ récepteur du neurone *MP*,

chaque unité de calcul d'agrégation maximale 1 reçoit ainsi en entrée l'adresse de la synapse activée @S. Chaque unité de calcul d'agrégation maximale 1 reçoit en outre en entrée les paramètres de contrôle *stop_in,* et *go* décrits ci-avant.

Chaque unité de calcul d'agrégation maximale 1 délivre une valeur d'impulsion de sortie $Spike_i = Spike[i]$ et le paramètres de contrôle *stop_out* décrit ci-avant.

Le dispositif 10 comprend le bloc de maximisation 15, noté « Max D », configuré pour déterminer la valeur de dureté $D_i$ parmi toutes les valeurs de dureté stockées en mémoire, ayant la valeur maximale et déterminer l'adresse de cette valeur de dureté $@MaxD = D_i$.

Le dispositif 10 comprend également un multiplexeur 16 implémentant le bloc de calcul d'impulsion de sortie contrôlé par le signal de commande $@MaxD$ configuré pour sélectionner la valeur de l'impulsion de sortie $Spike[@MaxD]$ qui correspond à l'adresse $@MaxD$ parmi les P valeurs d'impulsion qui sont délivrées en sortie par les P unités d'agrégation maximales.

Les valeurs de dureté $D_i$ sont utilisées par le bloc de calcul impulsion de sortie 16 pour sélectionner l'impulsion de sortie à considérer $Spike_{out}$, c'est-à-dire l'impulsion correspondant à l'adresse de la valeur de dureté maximale parmi les valeurs de dureté $D_1, D_2, D_3$ telle que déterminée par le bloc de calcul d'adresse de valeur de dureté maximale 15, noté « $Max\_D$ ».

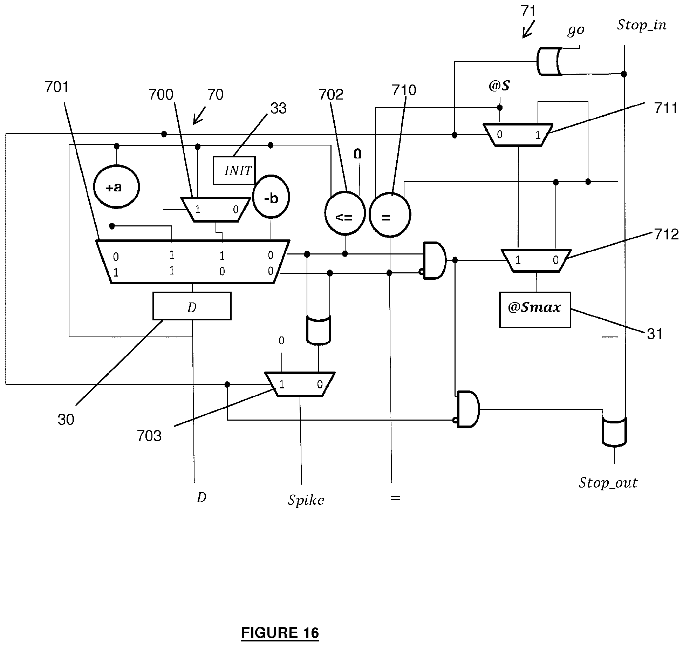

La figure 16 est une représentation sous forme d'un circuit numérique d'une unité 1 de déclenchement de neurone MP, notée *BM.* L'unité BM est configurée pour déterminer l'adresse $@SMax$ les paramètres d'inhibition d'entrée et sortie *stop_in* et *stop_out* et l'entrée d'activation générale *go* qui permettent d'éviter que deux blocs BM différentes ne stockent la même adresse $@Smax.$

Les modes de réalisation de l'invention proposent ainsi un nouveau modèle de neurone d'agrégation maximale permettant de calculer par approximation la réponse d'un neurone d'une couche d'agrégation maximale à une impulsion d'entrée.

En se basant sur un compteur incrémental/décrémental 32, et une mémoire 31 pour stocker la valeur de la synapse la plus active $@Smax,$ les modes de réalisation de l'invention permettent de calculer la réponse d'un neurone d'une couche d'agrégation maximale à une impulsion d'entrée avec un nombre de ressources matérielles optimisé, compatible avec les ressources classiquement allouées à un neurone IF, tout en conservant de bonnes performances. Alors que les solutions classiques nécessitent en mémoire N * C bits, les modes de réalisation proposés ne nécessitent que $log2(N)$ + C bits (N désignant le nombre de synapses et donc le nombre d'éléments de l'agrégation et C désigne la précision du compteur d'activité en bits). Seulement 2 opérations de comparaison par stimuli sont utiles pour chaque valeur de référence stockées ( comparaison de @S et @Smax et comparaison de D à zéro).

L'homme du métier comprendra que le calculateur 100 et en particulier le dispositif 10 de déclenchement des neurones de chaque couche d'agrégation maximale selon les modes de réalisation peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

**Revendications**

1. Calculateur (10) basé sur un réseau de neurones impulsionnel, le réseau comprenant des couches de neurones, les entrées et sorties de chaque neurone étant codées par des impulsions, les impulsions d'entrée étant reçues en séquence en entrée d'un neurone, chaque neurone du réseau comprenant un champ récepteur comprenant au moins une synapse, chaque synapse étant associée à une adresse de synapse, le calculateur étant configuré pour calculer, pour chaque couche de neurones, la valeur de sortie de chaque neurone en réponse à au moins une impulsion d'entrée,

le réseau comprenant en outre au moins une couche d'agrégation maximale, chaque couche d'agrégation comprenant des neurones d'agrégation maximale, chaque neurone d'agrégation maximale étant apte à délivrer une impulsion de sortie en réponse à la réception d'une impulsion d'entrée sur la synapse de son champ récepteur la plus active,

**caractérisé en ce que** le calculateur comprend un dispositif d'activation des neurones de la couche d'agrégation maximale (10), et **en ce que**, en réponse à une impulsion d'entrée reçue par un neurone de la couche d'agrégation maximale, le dispositif est configuré pour recevoir l'adresse de la synapse associée à ladite impulsion d'entrée reçue, dite adresse de synapse activée, le dispositif comprenant un comparateur d'adresse (11) configuré pour comparer l'adresse de la synapse activée avec un ensemble d'adresses de référence, comprenant au moins une adresse de référence, chaque adresse de référence étant associée à une valeur de dureté et à un neurone d'agrégation ;

le dispositif étant configuré pour activer un neurone de la couche d'agrégation maximale si l'adresse de la synapse activée est égale à l'une des adresses de référence, et que la valeur de dureté associée à cette adresse de référence a la valeur la plus grande parmi les valeurs de dureté associées aux autres adresses de référence dudit ensemble,

le dispositif (10) étant configuré pour mettre une adresse de référence à la valeur de ladite adresse de synapse activée, si ladite adresse de référence est distincte de ladite adresse de synapse activée et si la valeur de dureté est inférieure ou égale à zéro, le dispositif étant en outre configuré pour délivrer une valeur d'impulsion de sortie à la valeur un, en association avec ladite adresse de référence et mettre la valeur de dureté associée à l'adresse de référence à une valeur d'initialisation prédéfinie.

2. Calculateur selon la revendication 1, **caractérisé en ce que** le dispositif (10) comprend un compteur (13) configuré pour incrémenter la valeur de dureté associé à une adresse de référence dudit ensemble d'adresses de référence d'une valeur d'incrémentation choisie, si ladite adresse de référence est égale à ladite adresse de synapse activée, le dispositif étant en outre configuré pour délivrer une valeur d'impulsion de sortie mise à la valeur 1, en association avec ladite adresse de référence.

3. Calculateur selon la revendication 2, **caractérisé en ce que** le dispositif comprend un comparateur de valeur de dureté (12) pour comparer la valeur de dureté à zéro, et **en ce que** le compteur (13) est configuré pour décrémenter la valeur de dureté associé à une adresse de référence d'une valeur de décrémentation choisie, si ladite adresse de référence dudit ensemble d'adresses de référence est distincte de ladite adresse de synapse activée et si le comparateur de valeur de dureté indique que la valeur de dureté est strictement supérieure à zéro.

4. Calculateur selon l'une des revendications 2 à 3, **caractérisé en ce que** le dispositif (10) est configuré pour déterminer l'adresse de la valeur de dureté ayant la valeur maximale et pour délivrer en sortie du neurone de la couche d'activation maximale une valeur d'impulsion de sortie correspondant à la valeur de l'impulsion de sortie associée à l'adresse de référence correspondant à ladite valeur de dureté.

5. Calculateur selon l'une des revendications précédentes, **caractérisé en ce que** le dispositif (10) comprend au moins une mémoire d'adresses pour stocker lesdites adresses de référence (31), et au moins une mémoire de valeurs de dureté pour stocker les valeurs de dureté associés à chaque adresse de référence (32), chaque adresse de référence dans la mémoire d'adresses étant associée à une valeur de dureté dans la mémoire de valeurs de dureté.

6. Calculateur selon l'une des revendications précédentes, **caractérisé en ce que** le dispositif (10) comprend au moins une mémoire de valeurs d'initialisation pour stocker au moins une valeur d'initialisation (33).

7. Calculateur selon la revendication 6, **caractérisé en ce que** le dispositif (10) comprend une valeur d'initialisation différente pour chaque adresse de référence et **en ce que** ladite mémoire de valeur d'initialisation comprend une structure de donnée, chaque entrée de la structure de donnée étant configurée pour stocker une valeur d'initialisation associée à une adresse de référence (33).

8. Calculateur selon l'une des revendications précédentes, **caractérisé en ce que** le calculateur est implémenté sous forme d'un circuit numérique.

9. Calculateur selon l'une des revendications 1 à 7 précédentes, **caractérisé en ce que** le calculateur est implémenté sous forme d'un circuit analogique.

10. Procédé pour calculer les valeurs de sortie de neurones dans un réseau de neurones impulsionnel comprenant au moins une couche de neurones, en réponse à au moins une impulsion d'entrée, les entrées et sorties de chaque neurone étant codées par des impulsions, les impulsions d'entrée étant reçues par un neurone en séquence en entrée, chaque neurone du réseau comprenant un champ récepteur comprenant au moins une synapse, chaque synapse étant associée à une adresse de synapse, le réseau de neurones comprenant en outre au moins une couche d'agrégation maximale, chaque couche d'agrégation comprenant des neurones d'agrégation maximale, chaque neurone d'agrégation maximale étant apte à délivrer une impulsion de sortie en réponse à la réception d'une impulsion d'entrée sur la synapse de son champ récepteur la plus active,

**caractérisé en ce que** le procédé comprend une étape d'activation des neurones de la couche d'agrégation maximale (10), et **en ce que**, en réponse à une impulsion d'entrée reçue par un neurone de la couche d'agrégation maximale, ladite étape d'activation comprend les étapes consistant à :

- recevoir l'adresse de la synapse associée à ladite impulsion d'entrée reçue, dite adresse de synapse activée,
- comparer l'adresse de la synapse activée avec un ensemble d'adresses de référence, comprenant au moins une adresse de référence, chaque adresse de référence étant associée à une valeur de dureté et à un neurone d'agrégation ;
- activer un neurone de la couche d'agrégation maximale si l'adresse de la synapse activée est égale à l'une des adresses de référence et que la valeur de dureté associée à cette adresse de référence a la valeur la plus grande parmi les valeurs de dureté associées aux autres adresses de référence dudit ensemble,

le procédé comprenant en outre les étapes consistant à :

- mettre une adresse de référence à la valeur de ladite adresse de synapse activée, si ladite adresse de référence est distincte de ladite adresse de synapse activée et si la valeur de dureté est inférieure ou égale à zéro,
- délivrer une valeur d'impulsion de sortie mise à la valeur un en association avec ladite adresse de référence, et
- mettre la valeur de dureté associée à l'adresse de référence à une valeur d'initialisation prédéfinie.

11. Procédé selon la revendication 10, **caractérisé en ce qu'**il comprend les étapes consistant à :

- incrémenter la valeur de dureté associé à une adresse de référence dudit ensemble d'adresses de référence d'une valeur d'incrémentation choisie, si ladite adresse de référence est égale à ladite adresse de synapse activée, et
- délivrer une valeur d'impulsion de sortie mise à la valeur 1 pour ledit neurone d'agrégation maximale, en association avec ladite adresse de référence.

12. Procédé selon la revendication 10, **caractérisé en ce que** le procédé comprend une étape consistant à comparer la valeur de dureté à zéro, et décrémenter la valeur de dureté associée à une adresse de référence d'une valeur de décrémentation choisie, si ladite adresse de référence dudit ensemble d'adresses de référence est distincte de ladite adresse de synapse activée et si la valeur de dureté est strictement supérieure à zéro.

13. Procédé selon l'une des revendications 11 et 12, **caractérisé en ce que** le procédé comprend les étapes consistant à :

- déterminer l'adresse de la valeur de dureté ayant la valeur maximale, et
- délivrer en sortie du neurone de la couche d'activation maximale une valeur d'impulsion de sortie correspondant à la valeur de l'impulsion de sortie associée à l'adresse de référence correspondant à ladite valeur de dureté.

**Patentansprüche**

1. Rechner (10), der auf einem impulsgesteuerten neuronalen Netzwerk basiert, wobei das Netzwerk Schichten von Neuronen umfasst, wobei die Eingänge und Ausgänge jedes Neurons durch Impulse codiert sind, wobei die Eingangsimpulse sequenziell am Eingang eines Neurons empfangen werden, wobei jedes Neuron des Netzwerks ein mindestens eine Synapse umfassendes Empfängerfeld umfasst, wobei jede Synapse mit einer Synapsenadresse assoziiert ist, wobei der Rechner zum Berechnen, für jede Neuronenschicht, des Ausgangswerts jedes Neurons als Reaktion auf mindestens einen Eingangsimpuls konfiguriert ist,

wobei das Netzwerk ferner mindestens eine Maximalaggregationsschicht umfasst, wobei jede Aggregationsschicht Maximalaggregationsneuronen umfasst, wobei jedes Maximalaggregationsneuron einen Ausgangsimpuls als Reaktion auf den Empfang eines Eingangsimpulses an der aktivsten Synapse seines Empfängerfeldes liefern kann,

**dadurch gekennzeichnet, dass** der Rechner eine Vorrichtung zur Aktivierung der Neuronen der Maximalaggregationsschicht (10) umfasst, und dadurch, dass die Vorrichtung zum Empfangen, als Reaktion auf einen von einem Neuron der Maximalaggregationsschicht empfangenen Eingangsimpuls, der Adresse der mit dem empfangenen Eingangsimpuls assoziierten Synapse, aktivierte Synapsenadresse genannt, konfiguriert ist, wobei die Vorrichtung einen Adressenkomparator (11) umfasst, der zum Vergleichen der Adresse der aktivierten Synapse mit einem Satz von Referenzadressen konfiguriert ist, der mindestens eine Referenzadresse umfasst, wobei jede Referenzadresse mit einem Härtewert und einem Aggregationsneuron assoziiert ist;
wobei die Vorrichtung zum Aktivieren eines Neurons der Maximalaggregationsschicht konfiguriert ist, wenn die Adresse der aktivierten Synapse gleich einer der Referenzadressen ist und der mit dieser Referenzadresse assoziierte Härtewert den größten Wert unter den mit den anderen Referenzadressen des Satzes assoziierten Härtewerten hat,
wobei die Vorrichtung (10) zum Setzen einer Referenzadresse auf den Wert der aktivierten Synapsenadresse konfiguriert ist, wenn die Referenzadresse von der aktivierten Synapsenadresse verschieden ist und der Härtewert gleich oder kleiner Null ist, wobei die Vorrichtung ferner zum Liefern eines Ausgangsimpulswerts mit dem Wert Eins in Assoziation mit der Referenzadresse und zum Setzen des mit der Referenzadresse assoziierten Härtewerts auf einen vordefinierten Initialisierungswert konfiguriert ist.

2. Rechner nach Anspruch 1, **dadurch gekennzeichnet, dass** die Vorrichtung (10) einen Zähler (13) umfasst, der zum Inkrementieren des mit einer Referenzadresse des Satzes von Referenzadressen assoziierten Härtewerts um einen gewählten Inkrementwert konfiguriert ist, wenn die Referenzadresse gleich der aktivierten Synapsenadresse ist, wobei die Vorrichtung ferner zum Liefern eines auf den Wert 1 gesetzten Ausgangsimpulswertes in Assoziation mit der Referenzadresse konfiguriert ist.

3. Rechner nach Anspruch 2, **dadurch gekennzeichnet, dass** die Vorrichtung einen Härtewertkomparator (12) zum Vergleichen des Härtewerts mit Null umfasst, und dadurch, dass der Zähler (13) zum Dekrementieren des mit einer Referenzadresse assoziierten Härtewertes um einen gewählten Dekrementierungswert konfiguriert ist, wenn die Referenzadresse des Satzes von Referenzadressen von der aktivierten Synapsenadresse verschieden ist und der Härtewertkomparator anzeigt, dass der Härtewert strikt größer als Null ist.

4. Rechner nach Ansprüche 2 bis 3, **dadurch gekennzeichnet, dass** die Vorrichtung (10) zum Bestimmen der Adresse des Härtewerts mit dem maximalen Wert und zum Liefern, am Ausgang des Neurons der Maximalaktivierungsschicht, eines Ausgangsimpulswertes entsprechend dem Wert des mit der Referenzadresse assoziierten Ausgangsimpulses entsprechend dem Härtewert konfiguriert ist.

5. Rechner nach einem der vorhergehenden Ansprüche, **dadurch gekennzeichnet, dass** die Vorrichtung (10) mindestens einen Adressspeicher zum Speichern der Referenzadressen (31) und mindestens einen Härtewertspeicher zum Speichern der mit jeder Referenzadresse (32) assoziierten Härtewerte umfasst, wobei jede Referenzadresse im Adressspeicher mit einem Härtewert im Härtewertspeicher assoziiert ist.

6. Rechner nach einem der vorhergehenden Ansprüche, **dadurch gekennzeichnet, dass** die Vorrichtung (10) mindestens einen Initialisierungswertspeicher zum Speichern mindestens eines Initialisierungswerts (33) umfasst.

7. Rechner nach Anspruch 6, **dadurch gekennzeichnet, dass** die Vorrichtung (10) einen unterschiedlichen Initialisierungswert für jede Referenzadresse umfasst, und dadurch, dass der Initialisierungswertspeicher eine Datenstruktur umfasst, wobei jeder Eintrag in der Datenstruktur zum Speichern eines mit einer Referenzadresse (33) assoziierten Initialisierungswerts konfiguriert ist.

8. Rechner nach einem der vorhergehenden Ansprüche, **dadurch gekennzeichnet, dass** der Rechner als digitale Schaltung implementiert ist.

9. Rechner nach einem der vorhergehenden Ansprüche 1 bis 7, **dadurch gekennzeichnet, dass** der Rechner als analoge Schaltung implementiert ist.

10. Verfahren zum Berechnen der Ausgangswerte von Neuronen in einem mindestens eine Neuronenschicht umfassenden impulsgesteuerten neuronalen Netzwerk als Reaktion auf mindestens einen Eingangsimpuls, wobei die Eingänge und Ausgänge jedes Neurons mit Impulsen codiert werden, wobei die Eingangsimpulse von einem Neuron sequenziell am Eingang empfangen werden, wobei jedes Neuron des Netzwerks ein mindestens eine Synapse umfassendes Empfängerfeld umfasst, wobei jede Synapse mit einer Synapsenadresse assoziiert ist, wobei das neuronale Netzwerk ferner mindestens eine Maximalaggregationsschicht umfasst, wobei jede Aggregationsschicht Maximalaggregationsneuronen umfasst, wobei jedes Maximalaggregationsneuron einen Ausgangsimpuls als Reaktion auf den Empfang eines Eingangsimpulses an der aktivsten Synapse seines Empfängerfeldes liefern kann,

**dadurch gekennzeichnet, dass** das Verfahren einen Schritt des Aktivierens der Neuronen der Maximalaggregationsschicht (10) umfasst, und dadurch, dass als Reaktion auf einen von einem Neuron der Maximalaggregationsschicht empfangenen Eingangsimpuls der Aktivierungsschritt die folgenden Schritte umfasst:

- Empfangen der Adresse der mit dem empfangenen Eingangsimpuls assoziierten Synapse, aktivierte Synapsenadresse genannt,
- Vergleichen der Adresse der aktivierten Synapse mit einem Satz von Referenzadressen, der mindestens eine Referenzadresse umfasst, wobei jede Referenzadresse mit einem Härtewert und einem Aggregationsneuron assoziiert ist;
- Aktivieren eines Neurons der Maximalaggregationsschicht, wenn die Adresse der aktivierten Synapse gleich einer der Referenzadressen ist und der mit dieser Referenzadresse assoziierte Härtewert den größten Wert unter den mit den anderen Referenzadressen des Satzes assoziierten Härtewerten hat,

wobei das Verfahren ferner die folgenden Schritte umfasst:

- Setzen einer Referenzadresse auf den Wert der aktivierten Synapsenadresse, wenn die Referenzadresse von der aktivierten Synapsenadresse verschieden ist und der Härtewert gleich oder kleiner Null ist,
- Liefern eines auf den Wert Eins gesetzten Ausgangsimpulswerts in Assoziation mit der Referenzadresse, und
- Setzen des mit der Referenzadresse assoziierten Härtewerts auf einen vordefinierten Initialisierungswert.

**11.** Verfahren nach Anspruch 10, **dadurch gekennzeichnet, dass** es die folgenden Schritte umfasst:

- Inkrementieren des mit einer Referenzadresse des Satzes von Referenzadressen assoziierten Härtewerts um einen gewählten Inkrementierungswert, wenn die Referenzadresse gleich der aktivierten Synapsenadresse ist, und
- Liefern eines auf den Wert 1 gesetzten Ausgangsimpulswerts für das Maximalaggregationsneuron in Assoziation mit der Referenzadresse.

**12.** Verfahren nach Anspruch 10, **dadurch gekennzeichnet, dass** das Verfahren einen Schritt des Vergleichens des Härtewerts mit Null und des Dekrementierens des mit einer Referenzadresse assoziierten Härtewerts um einen gewählten Dekrementierungswert umfasst, wenn die Referenzadresse des Satzes von Referenzadressen von der aktivierten Synapsenadresse verschieden ist und der Härtewert strikt größer als Null ist.

**13.** Verfahren nach Anspruch 11 oder 12, **dadurch gekennzeichnet, dass** das Verfahren die folgenden Schritte umfasst:

- Bestimmen der Adresse des Härtewerts mit dem Maximalwert, und
- Liefern, am Ausgang des Neurons der Maximalaktivierungsschicht, eines Ausgangsimpulswerts entsprechend dem Wert des mit der Referenzadresse assoziierten Ausgangsimpulses entsprechend dem Härtewert.


**Claims**

**1.** A calculator (10) based on a spiking neural network, the network comprising layers of neurons, the inputs and outputs of each neuron being coded by spikes, the input spikes being received in sequence at the input of a neuron, each neuron of the network comprising a receptive field comprising at least one synapse, each synapse being associated with a synapse address, the calculator being configured to compute, for each layer of neurons, the output value of each neuron in response to at least one input spike,

the network further comprising at least one maximum pooling layer, each pooling layer comprising maximum pooling neurons, each maximum pooling neuron being able to deliver an output spike in response to the reception of an input spike on the most active synapse of its receptive field,
**characterised in that** the calculator comprises a device for activating the neurons of the maximum pooling layer (10) and **in that**, in response to an input spike received by a neuron of the maximum pooling layer, the device is configured to receive the address of the synapse associated with said received input spike, called activated synapse address, the device comprising an address comparator (11) configured to compare the address of the activated synapse with a set of reference addresses, comprising at least one reference address, each reference address being associated with a hardness value and with a pooling neuron;

the device being configured to activate a neuron of the maximum pooling layer if the address of the activated synapse is equal to one of the reference addresses and the hardness value associated with this reference address has the highest value from among the hardness values associated with the other reference addresses of said set,

the device (10) being configured to set a reference address to the value of said activated synapse address, if said reference address is different from said activated synapse address and if the hardness value is less than or equal to zero, the device being further configured to deliver an output spike value with the value one, in association with said reference address and to set the hardness value associated with the reference address to a predefined initialisation value.

2. The calculator of claim 1, **characterised in that** the device (10) comprises a counter (13) configured to increment the hardness value associated with a reference address of said set of reference addresses by a chosen incrementation value, if said reference address is equal to said activated synapse address, the device being further configured to deliver an output spike value set to the value 1, in association with said reference address.

3. The calculator of claim 2, **characterised in that** the device comprises a hardness value comparator (12) for comparing the hardness value with zero, and **in that** the counter (13) is configured to decrement the hardness value associated with a reference address by a chosen decrementation value, if said reference address of said set of reference addresses is different from said activated synapse address and if the hardness value comparator indicates that the hardness value is strictly greater than zero.

4. The calculator of any one of claims 2 to 3, **characterised in that** the device (10) is configured to determine the address of the hardness value having the maximum value and to deliver, at the output of the neuron of the maximum activation layer, an output spike value corresponding to the value of the output spike associated with the reference address corresponding to said hardness value.

5. The calculator of any one of the preceding claims, **characterised in that** the device (10) comprises at least one address memory for storing said reference addresses (31) and at least one hardness value memory for storing the hardness values associated with each reference address (32), each reference address in the address memory being associated with a hardness value in the hardness value memory.

6. The calculator of any one of the preceding claims, **characterised in that** the device (10) comprises at least one initialisation value memory for storing at least one initialisation value (33).

7. The calculator of claim 6, **characterised in that** the device (10) comprises a different initialisation value for each reference address and **in that** said initialisation value memory comprises a data structure, each input of the data structure being configured to store an initialisation value associated with a reference address (33).

8. The calculator of any one of the preceding claims, **characterised in that** the calculator is implemented in the form of a digital circuit.

9. The calculator of any one of the preceding claims 1 to 7, **characterised in that** the calculator is implemented in the form of an analogue circuit.

10. A method for calculating the output values of neurons in a spiking neural network comprising at least one layer of neurons, in response to at least one input spike, the inputs and outputs of each neuron being coded by spikes, the input spikes being received in sequence at the input by a neuron, each neuron of the network comprising a receptive field comprising at least one synapse, each synapse being associated with a synapse address, the neural network further comprising at least one maximum pooling layer, each pooling layer comprising maximum pooling neurons, each maximum pooling neuron being able to deliver an output spike in response to the reception of an input spike on the most active synapse of its receptive field,

**characterised in that** the method comprises a step of activating the neurons of the maximum pooling layer (10), and **in that**, in response to an input spike received by a neuron of the maximum pooling layer, said activation step comprises:

- receiving the address of the synapse associated with said received input spike, called activated synapse address,
- comparing the address of the activated synapse with a set of reference addresses, comprising at least one reference address, each reference address being associated with a hardness value and with a pooling neuron;
- activating a neuron of the maximum pooling layer if the address of the activated synapse is equal to one of the reference addresses and that the hardness value associated with this reference address has the highest value from among the hardness values associated with the other reference addresses of said set.

the method further comprising:

- setting a reference address to the value of said activated synapse address, if said reference address is different from said activated synapse address and if the hardness value is less than or equal to zero,
- delivering an output spike value set to the value one in association with said reference address, and
- setting the hardness value associated with the reference address to a predefined initialisation value.

11. The method of claim 10, **characterised in that** it comprises:

- incrementing the hardness value associated with a reference address of said set of reference addresses by a chosen incrementation value, if said reference address is equal to said activated synapse address, and
- delivering an output spike value set to the value 1 for said maximum pooling neuron, in association with said reference address.

12. The method of claim 10, **characterised in that** the method comprises a step of comparing the hardness value with zero, and decrementing the hardness value associated with a reference address by a chosen decrementation value, if said reference address of said set of reference addresses is different from said activated synapse address and if the hardness value is strictly greater than zero.

13. The method of any of claims 11 and 12, **characterised in that** the method comprises:

- determining the address of the hardness value having the maximum value, and
- delivering, at the output of the neuron of the maximum pooling layer, an output spike value corresponding to the value of the output spike associated with the reference address corresponding to said hardness value.

FIGURE 1

| | 1 | 2 | 3 | 4 | 5 | 6 |
|---|---|---|---|---|---|---|
| 1 | X | | | | X | X |
| 2 | X | X | | | | X |
| 3 | | X | X | | | X |
| 4 | | | X | X | | X |
| 5 | | | | X | X | X |

Cartes de sortie

Connexion = un noyau de convolution

Cartes d'entrée

**FIGURE 2**

**FIGURE 3**

FIGURE 4

**100**

**FIGURE 5**

60 @out

61 @S

62 @Spike

Champ réceptif

Carte d'entrée 21

**FIGURE 6**

@spike

4

@spike ➔ @S

5

@spike ➔ @out

6

@S ➔ @spike

@out

@spike

**FIGURE 7**

33

1 @S 35 **10**

| | | |
|---|---|---|
| Mémoire de valeur d'initialisation $INIT$ | UNITE DE CALCUL D'AGREGATION MAXIMALE | $Spike_1$ |
| | | $D_1$ |

BLOC DE DETERMINATION D'IMPULSION DE SORTIE

32

MEMOIRE $D$

$Spike_2$

$D_2$

$Spike_3$

$D_3$

....

30

Mémoire de valeur de référence $@Smax$

UNITE DE CALCUL D'AGREGATION MAXIMALE

$Spike_N$

$D_N$

1

$Spike_{out}$

**FIGURE 8A**

**1**

@S

Comparateur @S et @$Smax_k$ (11)

Compteur $D_k$ (13)

35

Bloc de mise à jour de @$Smax_k$ (15)

Comparateur $D_k$ et seuil (12)

Bloc de détermination d'impulsion de sortie élémentaire (16)

Impulsion de sortie

FIGURE 8B

RECEVOIR UNE IMPULSION SUR UN NEURONE MP (400)

RECEVOIR L'ADRESSE DE LA SYNAPSE ACTIVEE @S (401)

COMPARER @S AUX P ADRESSES DE REFERENCES $@Smax_i$ (402)

oui / @S égal à l'une des valeurs $@Smax_k$ et $D_k$ maximale (403) ? / non

Neurone déclenché et $Spike_{out} = Spike\,[@\max(D_k)]$ (404)

Neurone non déclenché (405)

**FIGURE 9**

RECEVOIR UNE IMPULSION SUR UN NEURONE MP (500)

RECEVOIR L'ADRESSE DE LA SYNAPSE ACTIVEE @S (501)

COMPARER @S aux ADRESSES DE REFERENCES $@Smax_i$ (502)

INITIALISER LES VARABLE $go, stop\_in$ et $stop\_out$ à 0 (503)

Pour chaque indice k, k=0 à N(504)

$Spike[k] = 0$ et $stop - in = stop - out$ (505)

@S != $@Smax_k$ ?
(506)

oui

non

$D_k \leq 0$ ?
(507)

non

oui

Si NON($go$ OU $stop\_in$)
? (509)

oui

$@Smax[k] = @S$ (510)

$D_k = INIT[k]$ (511)

$Spike[k] = 1$ (512)

$stop\_out = 1$ (513)

$Spike[k] = 1$
(514)

$D_k = D_k + a_k$ (516)

$D_k = D_k - b_k$(508)

$k = k + 1$ (518)

$stop_{out} = stoput\ OU\ stop\_in$ (517)

non

$k = N$ ? (517)

oui

$Spike_{out} = Spike\ [@\max(D_k)]$ (519)

**FIGURE 10**

RECEVOIR UNE IMPULSION SUR UN NEURONE MP (600)

RECEVOIR L'ADRESSE DE LA SYNAPSE ACTIVEE @S (601)

COMPARER @S A l'ADRESSE $@Smax$ (602)

oui ← @S != $@Smax$ ?
(603) → non

$D \leq 0$ ?
(604)

non

oui

$@Smax[k] = @S$
(605)

$D = INIT$
(606)

$Spike = 1$
(607)

$Spike = 1$
(610)

Déclenchement
neurone MP (611)

$D = D - b$ (608)

Non déclenchement neurone MP
(608)

$D = D + a$ (612)

**FIGURE 11**

**FIGURE 12**

**FIGURE 13**

| stop_in | Go | <= | = | spike | + | - | Ref | New @S | Stop_out |
|---------|----|----|----|-------|----|----|-----|--------|----------|
| 0 | 0 | 0 | 0 | 0 | 0 | 1 | 0 | 0 | 0 |
| 0 | 0 | 0 | 1 | 1 | 1 | 0 | 0 | 0 | 0 |
| 0 | 0 | 1 | 0 | 1 | 0 | 0 | 1 | 1 | 1 |
| 0 | 0 | 1 | 1 | 1 | 1 | 0 | 0 | 0 | 0 |

| stop_in | Go | <= | = | spike | + | - | Ref | New @S | Stop_out |
|---------|----|----|----|-------|----|----|-----|--------|----------|
| 0 | 1 | 0 | 0 | 0 | 0 | 1 | 0 | 0 | 0 |
| 0 | 1 | 0 | 1 | 1 | 1 | 0 | 0 | 0 | 0 |
| 0 | 1 | 1 | 0 | 0 | 0 | 0 | 0 | 0 | 0 |
| 0 | 1 | 1 | 1 | 1 | 1 | 0 | 0 | 0 | 0 |

| stop_in | Go | <= | = | spike | + | - | Ref | New @S | Stop_out |
|---------|----|----|----|-------|----|----|-----|--------|----------|
| 1 | 0 | 0 | 0 | 0 | 0 | 1 | 0 | 0 | 1 |
| 1 | 0 | 0 | 1 | 1 | 1 | 0 | 0 | 0 | 1 |
| 1 | 0 | 1 | 0 | 0 | 0 | 0 | 0 | 0 | 1 |
| 1 | 0 | 1 | 1 | 1 | 1 | 0 | 0 | 0 | 1 |

| stop_in | Go | <= | = | spike | + | - | Ref | New @S | Stop_out |
|---------|----|----|----|-------|----|----|-----|--------|----------|
| 1 | 1 | 0 | 0 | 0 | 0 | 1 | 0 | 0 | 1 |
| 1 | 1 | 0 | 1 | 1 | 1 | 0 | 0 | 0 | 1 |
| 1 | 1 | 1 | 0 | 0 | 0 | 0 | 0 | 0 | 1 |
| 1 | 1 | 1 | 1 | 1 | 1 | 0 | 0 | 0 | 1 |

FIGURE 14

**FIGURE 15**

**FIGURE 16**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K. FUKUSHIMA.** Neocognitron: A self-organizing neural network model for a mechanism of pattern recognition unaffected by shift in position. *Biological Cybernetics,* 1980, vol. 36 (4), ISSN 0340-1200, 193-202
- **D. C. CIRESAN ; U. MEIER ; J. MASCI ; L. M. GAMBARDELLA ; J. SCHMIDHUBER.** Flexible, high performance convolutional neural networks for image classification. *Proceedings of the Twenty-Second International Joint Conférence on Artificial Intelligence - Volume Two», IJCAI,* 2011, vol. 11, ISBN 978-1-57735-514-4, 1237-1242
- **L. CAMUNAS-MESA ; C. ZAMARRENO-RAMOS ; A. LINARES-BARRANCO ; A. ACOSTA-JIMENEZ ; T. SERRANO-GOTARREDONA ; B. LINARES-BARRANCO.** An event-driven multi-kernel convolution processor module for event-driven vision sensors. *Solid-State Circuits, IEEE Journal of,* 2012, vol. 47 (2), ISSN 0018-9200, 504-517
- A Multichip Pulse-Based Neuromorphic Infrastructure and Its Application to a Model of Orientation Selectivity. **E. CHICCA et al.** IEEE Trans. Cire. Sys. Part I: Regular Papers. IEEE, 01 Mai 2007, vol. 54
- **HAFLIGER PHILIP.** Adaptive WTA with an Analog VLSI Neuromorphic Learning Chip. *IEEE Transactions on Neural Networks,* 2007, vol. 18 (2
- **ANGELA J. YU ; MARTIN A. GIESE ; TOMASO A. POGGIO.** Biophysiologically Plausible Implementations of the Maximum Operation. *Neural Computation,* Novembre 2002, vol. 14 (12